# EUROPÄISCHE PATENTSCHRIFT

(11) **EP 2 651 667 B1**
(45) Veröffentlichungstag und Bekanntmachung des Hinweises auf die Patenterteilung: **25.04.2018**
(21) Anmeldenummer: 11787616.9
(22) Anmeldetag: 22.11.2011
(51) Int. Cl.: F16F 9/02, B60G 17/015, B60G 17/052, F16K 31/06

(54) **DRUCKLUFTVERSORGUNGSANLAGE, PNEUMATISCHES SYSTEM UND VERFAHREN**
AIR SUPPLY SYSTEM, PNEUMATIC SYSTEM AND METHOD
SYSTÈME D'ALIMENTATION D'AIR, SYSTEME PNEUMATIQUE ET PROCEDE

(30) Priorität: 16.12.2010 DE 102010054713
(43) Veröffentlichungstag der Anmeldung: 23.10.2013
(73) Patentinhaber: WABCO GmbH, 30453 Hannover (DE)
(72) Erfinder: FRANK, Dieter, 30171 Hannover (DE); MEISSNER, Frank, 30453 Hannover (DE)
(74) Vertreter: Lauerwald, Jörg
(86) Internationale Anmeldenummer: PCT/EP2011/005862
(87) Internationale Veröffentlichungsnummer: WO 2012/079687

(56) Entgegenhaltungen:
- DE-A1- 3 542 974
- DE-A1- 3 917 245
- DE-A1- 4 327 764
- US-A- 5 142 897

## Beschreibung

Die Erfindung betrifft eine Druckluftversorgungsanlage gemäß dem Oberbegriff des Anspruchs 1. Weiter betrifft die Erfindung ein pneumatisches System gemäß dem Oberbegriff des Anspruchs 13 mit einer solchen Druckluftversorgungsanlage und ein Verfahren gemäß dem Oberbegriff des Anspruchs 14 zum Betrieb einer Pneumatikanlage.

Eine Druckluftversorgungsanlage wird in Fahrzeugen aller Art, insbesondere zur Versorgung einer Luftfederanlage eines Fahrzeugs mit Druckluft, eingesetzt. Luftfederanlagen können auch Niveauregelungseinrichtungen umfassen, mit denen der Abstand zwischen Fahrzeugachse und Fahrzeugaufbau eingestellt werden kann. Eine Luftfederanlage eines eingangs genannten pneumatischen Systems umfasst eine Anzahl von an einer gemeinsamen Leitung (Galerie) pneumatisch angeschlossenen Luftbalgen, die mit zunehmender Befüllung den Fahrzeugaufbau anheben und mit abnehmender Befüllung absenken können. Mit wachsendem Abstand zwischen Fahrzeugachse und Fahrzeugaufbau bzw. Bodenfreiheit werden die Federwege länger und auch größere Bodenunebenheiten können überwunden werden, ohne dass es zu einer Berührung mit dem Fahrzeugaufbau kommt. Solche Systeme werden in Geländefahrzeugen und Sport Utility Vehicles (SUV) eingesetzt. Insbesondere bei SUVs ist es bei sehr leistungsfähigen Motoren wünschenswert, das Fahrzeug einerseits für hohe Geschwindigkeiten auf der Straße mit vergleichsweise geringer Bodenfreiheit zu versehen und andererseits für das Gelände mit einer vergleichsweise großen Bodenfreiheit zu versehen. Es ist weiter wünschenswert, eine Veränderung der Bodenfreiheit möglichst schnell umzusetzen, was die Anforderungen hinsichtlich Schnelligkeit, Flexibilität und Verlässlichkeit einer Druckluftversorgungsanlage erhöht.

Eine Druckluftversorgungsanlage zur Verwendung in einem pneumatischen System mit einer Pneumatikanlage, beispielsweise einer zuvor beschriebenen Luftfederanlage, wird mit Druckluft aus einer Druckluftzuführung, beispielsweise im Bereich eines Druckniveaus von 5 bis 20 bar, betrieben. Die Druckluft wird mit einem Luftverdichter (Kompressor) der Druckluftzuführung zur Verfügung gestellt. Die Druckluftzuführung ist zur Versorgung der Pneumatikanlage mit einem Druckluftanschluss pneumatisch verbunden und andererseits mit einem Entlüftungsanschluss pneumatisch verbunden. Über eine Entlüftungsventilanordnung kann durch Ablassen von Luft die Druckluftversorgungsanlage und/oder Pneumatikanlage zum Entlüftungsanschluss hin entlüftet werden. Die US5142897 beschreibt ein Luftfedersystem mit einem konventionellen Entlüftungsventil mit einem Magnetteil und einem einzigen Pneumatikteil.

Die DE3917245A1 beschreibt ein Aufhängungsregelungseinrichtung mit einem konventionellen 2/2-Wege-Entlüftungsventil mit einem Magnetteil und einem einzigen Pneumatikteil.

Die DE4327764A1 beschreibt eine Luftfederanordnung mit einem konventionellen Entlüftungsventil mit einem Magnetteil und einem einzigen Pneumatikteil.

Zur Sicherstellung eines langfristigen Betriebs der Druckluftversorgungsanlage weist diese einen Lufttrockner auf, mit dem die Druckluft zu trocknen ist. Dadurch wird die Ansammlung von Feuchtigkeit im Pneumatiksystem vermieden, die ansonsten bei vergleichsweise niedrigen Temperaturen zu ventilschädigender Kristallbildung und sonstigen unerwünschten Effekten in der Druckluftversorgungsanlage und in der Pneumatikanlage führen kann. Ein Lufttrockner weist ein Trockenmittel auf, üblicherweise eine Granulatschüttung, welche von der Druckluft durchströmbar ist, so dass die Granulatschüttung - bei vergleichsweise hohem Druck - in der Druckluft enthaltene Feuchtigkeit durch Adsorption aufnehmen kann. Ein Lufttrockner kann gegebenenfalls als regenerativer Lufttrockner ausgelegt werden. Dazu kann die Granulatschüttung bei jedem Entlüftungszyklus - bei vergleichsweise niedrigem Druck - mit der getrockneten Druckluft aus dem Luftfederungssystem im Gegenstrom relativ zur Befüllrichtung durchströmt werden. Dazu kann die Entlüftungsventilanordnung geöffnet werden. Für eine solche - auch als Druckwechseladsorption bezeichnete - Anwendung hat es sich als wünschenswert erwiesen, eine Druckluftversorgungsanlage flexibel und gleichzeitig verlässlich auszulegen. Insbesondere soll eine vergleichsweise schnelle Entlüftung mit einem dennoch für eine Regeneration des Lufttrockners ausreichendem Druckwechsel ermöglicht sein.

Ein Magnetventil zur Realisierung einer Mehrfachfunktion kann mit wenigstens drei angeschlossenen Pneumatikkammern - nämlich zur pneumatischen Kontaktierung funktionell unterschiedlicher, immer separater und mit unterschiedlichen Druckbeaufschlagungen versehenen Pneumatikkammern - mit zwei getrennten Hubankern in einer gemeinsamen Erregerwicklung des Magnetventils realisiert werden. Jeder der Hubanker ist dabei jeweils einer anderen separaten Pneumatikkammer zugeordnet. Grundsätzlich ist ein solches Doppelanker-Magnetventil beispielsweise aus DE 201 60 30 oder aus Anmeldungen der Anmelderin, wie DE 35 01 708 A1 oder DE 10 2006 041 010 A1 bekannt. Die grundsätzliche Funktionsweise eines Doppelanker-Magnetventils ist beispielsweise der Anmeldung der Anmelderin DE 10 2004 035 763 A1 zu entnehmen.

Aus DE 35 429 74 A1 der Anmelderin ist eine Niveauregeleinrichtung für Fahrzeuge mit Luftfiltern bekannt, mit der in Abhängigkeit von der Fahrzeugbelastung ein vorgegebener Abstand der Fahrzeugzelle von der Fahrzeugachse durch Auffüllen oder Entleeren der Luftfedern aufrechterhalten werden kann. Die Einrichtung enthält ein mit dem Druck in den Luftfedern steuerbares Sicherheitsventil. Eine solche eingangs genannte Druckluftversorgungsanlage ist noch verbesserbar.

DE 199 11 933 B4 offenbart einen Drucklufterzeuger mit einem Lufttrockner mit einer ersten Druckluftversorgungsleitung, wobei die Druckluft durch ein Trockenmittel geleitet wird, und mit einer zweiten Druckluftversorgungsleitung ohne dass die Druckluft durch das Trockenmittel geleitet wird.

Eine eingangs genannte Druckluftversorgungsanlage ist in EP 1 165 333 B2 im Rahmen eines eingangs genannten pneumatischen Systems mit einer Luftfederanlage offenbart. Diese weist neben einer separat absperrbaren Hauptentlüftungsleitung eine Hochdruckentlüftungsleitung mit einem zusätzlichen Hochdruckentlüftungsventil neben dem mit einem Steuerventil pneumatisch angesteuerten Hauptentlüftungsventil in der Hauptentlüftungsleitung auf und die zur Hauptentlüftungsleitung parallel geschaltet ist. Der freie Durchströmquerschnitt des separaten Hochdruckentlüftungsventils ist geringer als derjenige des Hauptentlüftungsventils. Eine solche Druckluftversorgungsanlage ist noch verbesserbar. Es hat sich gezeigt, dass bei Entlüftung einer solchen Druckluftversorgungsanlage über die Hochdruckentlüftungsleitung die Entlüftung von trockener Luft erfolgt, welche nicht für die Regeneration des Trockenmittels verwendet wird. Dies kommt einer unnötigen Verschwendung von trockener Luft gleich, insbesondere für den Fall, dass eine für obige Anwendungen geeignete, flexible, schnelle und dennoch verlässliche Betätigung der Druckluftversorgungsanlage mit entsprechend hoher Betätigungsrate erforderlich sein sollte. Über das mit vergleichsweise kleiner Nennweite versehene Steuerventil kann daher ein mit vergleichsweise großer Nennweite auslegbares Hauptentlüftungsventil pneumatisch vorgesteuert werden. Allerdings ist eine solche zur indirekten Schaltung eines Druckluftvolumens ausgelegte Anordnung vergleichsweise aufwändig.

An dieser Stelle setzt die Erfindung an, deren Aufgabe es ist, eine vereinfachte Druckluftversorgungsanlage zum Betreiben einer Pneumatikanlage und ein Verfahren anzugeben, die eine verlässliche und dennoch flexible, gegebenenfalls schnelle Funktionsweise aufweist, insbesondere hinsichtlich des Standes der Technik verbessert ist. Insbesondere soll eine Druckluftversorgungsanlage vergleichsweise einfach aufgebaut sein und ein vergleichsweise schnelles Entlüften ermöglichen. Insbesondere soll eine Entlüftungs- und/oder Trockenleistung der Druckluftversorgungsanlage verbessert sein. Insbesondere soll eine Akustik der Druckluftversorgungsanlage für den Fall einer Entlüftung verbessert sein. Eine weitere Aufgabe der Erfindung ist es, ein ebenso vorteilhaft gestaltetes pneumatisches System mit der Druckluftversorgungsanlage und einer Pneumatikanlage anzugeben. Mit anderen Worten soll eine Druckluftversorgungsanlage und ein pneumatisches System bei insgesamt vereinfachtem Aufbau hinsichtlich Entlüftung und Trocknerregeneration effektiver und möglichst geräuscharm arbeiten.

Betreffend die Druckluftversorgungsanlage wird die Aufgabe durch die Erfindung mit einer Druckluftversorgungsanlage der eingangs genannten Art gelöst, bei der erfindungsgemäß die Merkmale des kennzeichnenden Teils des Anspruchs 1 vorgesehen sind.

Die Erfindung führt auf ein pneumatisches System des Anspruchs 13 mit einer erfindungsgemäßen Druckluftversorgungsanlage.

Die Erfindung führt auch auf ein erfindungsgemäßes Verfahren nach Anspruch 14.

Die Erfindung geht von der Überlegung aus, dass es zur einfachen Realisierung einer flexiblen und schnellen Betätigung der Druckluftversorgungsanlage vorteilhaft ist, für einen Pneumatikteil der Magnetventilanordnung die verfügbare pneumatische Nennweite der Magnetventilanordnung, insbesondere des Entlüftungsmagnetventils, insgesamt flexibel zu gestalten, insbesondere zu erhöhen. Die Nennweite ist als Übergang zwischen zwei der Magnetventilanordnung zugeordneten Pneumatikkammern einer Entlüftungsleitung - nämlich einer der Magnetventilanordnung vorgeordneten und einer nachgeordneten Pneumatikkammer der Entlüftungsleitung - vorgesehen. Sowohl die aus dem Stand der Technik bekannten Druckluftversorgungsanlagen als auch die für Doppelanker-Magnetventile vorgesehenen Detaillösungen sehen für eine pneumatische Leitung eine einzige begrenzte Nennweite eines Pneumatikteils eines Magnetventils vor. Letztlich führt dies zu einer festen und begrenzten für eine Entlüftung und/oder Trocknerregeneration zur Verfügung stehenden Nennweite einer Magnetventilanordnung, in Form der einzigen Nennweite des Magnetventils. Dies hat sich, wie von der Erfindung erkannt als gegebenenfalls unzureichend oder unflexibel erwiesen. Die Erfindung hat erkannt, dass eine flexible Gestaltung, insbesondere Erhöhung, der maximal zur Verfügung stehenden Nennweite bei einer Magnetventilanordnung in einer pneumatischen Leitung, dadurch erreicht werden kann, dass ein Pneumatikteil der Magnetventilanordnung ein Primärventil und ein Sekundärventil in der pneumatischen Leitung aufweist. Die Ventile können parallel oder in Reihe geschaltet, stromlos offen oder geschlossen sein - dies in beliebiger Kombination. Eine Reihenanordnung und Parallelanordnung des Primär- und Sekundärventils eignet sich für eine besonders flexibel gestaltbare zeitliche Schaltungsabfolge des Primär- und Sekundärventils, so dass unterschiedliche Nennweiten zu unterschiedlichen Zeitpunkten für die Entlüftungsleitung zur Verfügung gestellt werden können. Dadurch können Druckspitzen bei einer Entlüftung und so die Akustik vermindert, insbesondere ein Entlüftungsknall vermieden werden. Eine Parallelanordnung hat sich zusätzlich als besonders vorteilhaft für eine schrittweise Erhöhung der für die Entlüftungsleitung zur Verfügung stehenden Nennweiten erwiesen, so dass eine besonders schnelle Entlüftung dennoch unter Vermeidung eines Entlüftungsknalls erfolgen kann. Eine übermäßige Akustik bzw. ein Entlüftungsknall ist bei einem Entlüftungsvorgang immer dann zu befürchten, wenn ein zu großes Druckluftvolumen in zu kurzer Zeit, d.h. bei zu hoher Druckamplitude entlüftet wird. Andererseits ist für eine bestmögliche Regeneration des Lufttrockners eine vergleichsweise hohe Druckwechselamplitude erwünscht. Gesteigerte Effizienz hinsichtlich Entlüftung und Trocknerregeneration einerseits und eine geräuscharme Arbeitsweise andererseits können somit gegenläufige Bedingungen haben. Das zuvor beschriebene Konzept der Erfindung realisiert einen besonders vorteilhaften Kompromiss zwischen Trocknerregeneration und Entlüftungseffizienz einerseits und Akustik andererseits.

Darüber hinaus lässt sich eine verlässliche und konstruktiv vereinfachte Lösung gemäß der Erfindung dadurch realisieren, dass das Primärventil und das Sekundärventil mit einem gemeinsamen auf Primär- und Sekundärventil wirkenden Steuermittel des Magnetteils der Magnetventilanordnung aktivierbar ist. Mit anderen Worten lässt sich für das Primärventil und das Sekundärventil des Pneumatikteils praktisch ein gemeinsamer Magnetteil der Magnetventilanordnung nutzen. Zu einem Pneumatikteil einer Magnetventilanordnung gehören insbesondere die pneumatisch wirkenden Teile wie das Ventil als solches mit Ventilkörper, Ventilsitz, Ventilgehäuse oder dgl. Zu einem Magnetteil einer Magnetventilanordnung gehören insbesondere die elektrisch und/oder magnetisch wirkenden Teile wie Aktuier- und/oder Steuermittel für das Ventil, wie Spule, Anker, Wicklung, Joch, Magnetkern, Steuerleitung sowie Anschluss- und Übergabestelle oder dergleichen an eine Steuerung bzw. an die Spule.

Insgesamt ergibt sich durch das Konzept der Erfindung eine verbesserte Funktionalität der Magnetventilanordnung innerhalb der Druckluftversorgungsanlage. So kann die Magnetventilanordnung vorteilhaft praktisch ohne funktionelle Beschränkungen, auch bei kleinen Vorsteuerdrücken bzw. niedrigen Balgdrücken, für eine Luftfederanlage realisiert werden. Hinsichtlich der Funktionalität ergibt sich eine vorteilhafte Erweiterung des Funktionsbereichs auf hohe Drücke, insbesondere bei dennoch größeren Nennweiten der Magnetventilanordnung insgesamt, nämlich vor allem im Falle einer Addition der Nennweiten von Primärventil und Sekundärventil bei einer pneumatischen Parallelschaltung derselben. Als wesentlicher Vorteil ergibt sich die Möglichkeit eines flexibler gestaltbaren und insbesondere vergrößerten Nennweitenbereichs der Magnetventilanordnung in Kombination mit einer vergleichsweise einfachen Realisierung und der damit verbundenen verbesserten Bauraumnutzung gegenüber vorbekannten Lösungen.

Weitere vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Vorteilhaft ist ein pneumatischer entlüftungsseitiger Anschluss und pneumatischer druckluftanschlussseitiger Anschluss der Magnetventilanordnung an eine einzige pneumatische Leitung angeschlossen.

Vorteilhaft sind die Druckluftzuführung und der Druckluftanschluss mit der Druckluftversorgungsleitung verbunden und/oder die Druckluftzuführung und der Entlüftungsanschluss mit der Entlüftungsleitung verbunden. Insbesondere bilden die Druckluftversorgungsleitung und die Entlüftungsleitung zwei separate pneumatische Verbindungen. Insbesondere zweigt die Entlüftungsleitung von der Druckluftversorgungsleitung an der Druckluftzuführung ab.

Der druckluftanschlussseitige Anschluss ist vorteilhaft an der Druckluftzuführung als nächstliegender Anschluss unmittelbar oder mittelbar angeschlossen. Der entlüftungsseitige Anschluss ist vorteilhaft an den Entlüftungsanschluss als nächstliegender Anschluss unmittelbar oder mittelbar angeschlossen. Vorteilhaft ist die Magnetventilanordnung an nur zwei dem Primärventil und dem Sekundärventil gemeinsamen Pneumatikkammern der Entlüftungsleitung angeschlossen. Im Falle einer Parallelschaltung werden in der einzigen Leitung zwei alternative pneumatische Führungen mit dem Primärventil bzw. dem Sekundärventil zur Verfügung gestellt, die alternativ zueinander oder in Kombination zwischen dem entlüftungsseitigen und dem druckluftanschlussseitigen Anschluss gewählt werden können. Die pneumatischen Führungen können, insbesondere im Falle einer Parallelschaltung des Primär- und Sekundärventils, durch separate Zweigleitungen realisiert sein. Im Falle einer Reihenschaltung von Primärventil und Sekundärventil können die pneumatischen Führungen auch mit der einzigen gemeinsamen Leitung verwirklicht sein für die unterschiedliche Nennweiten zu unterschiedlichen Zeitpunkten freigegeben werden können. Die genannten Nennweiten lassen sich beispielsweise über geeignete Drosseln in der einzigen gemeinsamen Leitung oder den genannten Führungen oder durch Ausbildung von Öffnungen oder Ventilsitzen im Primärventil und/oder Sekundärventil realisieren.

Die einzige gemeinsame pneumatische Leitung kann besonders vorteilhaft eine Entlüftungsleitung sein. Mit anderen Worten hat es sich als vorteilhaft erwiesen, dass die Druckluftzuführung und die Entlüftung mit einer Entlüftungsleitung verbunden sind, wobei die Magnetventilanordnung zwischen zwei Anschlüssen in der Entlüftungsleitung angeordnet ist. In einer dazu alternativen oder gegebenenfalls kombinierten Weiterbildung kann die einzige gemeinsame pneumatische Leitung auch als Druckluftversorgungsleitung ausgebildet sein. In dem Fall ist die Druckluftversorgungsleitung wenigstens teilweise auch als eine Entlüftungsleitung ausgelegt. Die Weiterbildung sieht insbesondere vor, dass die Druckluftzuführung und der Druckluftanschluss für die Pneumatikanlage mit einer Druckluftversorgungsleitung verbunden sind, wobei die Magnetventilanordnung zwischen zwei Anschlüssen in der Druckluftversorgungsleitung angeordnet ist.

Bei den vorgenannten Weiterbildungen hat es sich insbesondere als vorteilhaft erwiesen, dass die Magnetventilanordnung einen einzigen pneumatischen entlüftungsseitigen und/oder einen einzigen pneumatischen druckluftanschlussseitigen Anschluss aufweist. Dies lässt sich besonders einfach realisieren und gewährleistet die schnelle und sichere Funktionsweise der Druckluftversorgungsanlage.

Eine Schaltung oder Ausführung des Primärventils und/oder Sekundärventils kann je nach Bedarf erfolgen. Insbesondere kann das Primärventil und das Sekundärventil jeweils in einer separaten Zweigleitung einer Parallelschaltung angeordnet sein. Das Primärventil und das Sekundärventil kann auch in einem gemeinsamen Leitungsabschnitt einer Reihenschaltung angeordnet sein. Das Primärventil und/oder das Sekundärventil kann stromlos offen oder stromlos geschlossen gebildet sein. Es hat sich, insbesondere im Falle einer Parallelschaltung, als vorteilhaft erwiesen, dass das Primärventil und/oder das Sekundärventil einen Druckbegrenzer aufweist. Ein Druckbegrenzer ist vorteilhaft dazu geeignet, eine Überladung des Systems im Fehlerfall zu vermeiden. Ein so weitergebildetes Primärventil und/oder Sekundärventil hält eine pneumatische Verbindung bis zu einem vergleichsweise hohen Grenzdruck dicht, wobei der Druckbegrenzer das Primärventil und/oder Sekundärventil erst bei dem vergleichsweise hohen Grenzdruck öffnet. Es hat sich außerdem unabhängig davon als vorteilhaft erwiesen, für bestimmte Anforderungen einen Restdruck im System zu halten. Ein Restdruck im System kann ein Zusammenfalten von Bälgen in einer Luftfederanlage vermeiden. Zum Abtrennen des Trockners gegen die Umgebung, insbesondere bei Verwendung eines vorgenannten stromlos offenen Primärventils und/oder Sekundärventils, hat sich ein Restdruckhalteventil in der Entlüftungsleitung als vorteilhaft erwiesen.

Besonders vorteilhaft ist eine konstruktive Realisierung der Druckluftversorgungsanlage in Form einer Einrichtung mit einer Gehäuseanordnung, die eine Anzahl von Bereichen aufweist. Es hat sich gezeigt, dass sich eine Gehäuseanordnung mit einer Anzahl von Bereichen hinsichtlich ihrer geometrischen Form besonders flexibel auf die Erfordernisse bei einem Fahrzeug anpassen lässt. Als besonders vorteilhaft hat sich eine U-Bauform erwiesen, d. h. eine U-Bauform, bei welcher zwei der Bereiche je einen Schenkel der U-Bauform und einer der Bereiche eine Basis der U-Bauform bilden. Insbesondere ist es vorteilhaft, dass in einem ersten Bereich ein Antrieb, und/oder in einem zweiten Bereich der vom Antrieb antreibbare Luftverdichter und/oder in einem mit dem zweiten Bereich über eine Druckquellen-Schnittstelle verbundenen dritten Bereich der Lufttrockner und die Magnetventilanordnung angeordnet ist. Vorteilhaft kann der Lufttrockner über Luftdurchlässe des dritten Bereichs durchströmbar sein. Eine Strömungsrichtung ist vorliegend definiert relativ zu einer Strömungsrichtung, die beim Befüllen der Pneumatikanlage über den Lufttrockner vorliegt. Zur Regeneration wird der Lufttrockner vorteilhaft im Gegenstrom zur Strömungsrichtung bei Befüllen durchströmt.

In einer besonders bevorzugten Weiterbildung ist die Magnetventilanordnung zur direkten Schaltung eines Druckluftvolumens ausgelegt, weist also an Ventilen nur das Primär- und Sekundärventil auf. Vorteilhaft ist die Magnetventilanordnung frei von einem Steuerventil. Mit anderen Worten dient die Magnetventilanordnung gemäß dieser Weiterbildung zur Realisierung einer direkt gesteuerten Entlüftungsmagnetventilanordnung. Es hat sich gezeigt, dass durch direkte Schaltung eines gesamten Druckluftvolumens die Schaltzeit der direkt gesteuerten Entlüftungsmagnetventilanordnung unterhalb von indirekt gesteuerten Entlüftungsmagnetventilanordnungen liegen kann, wenn man von gleich großen Entlüftungsquerschnitten ausgeht. Wie von der Weiterbildung erkannt, ist dies vorteilhaft für eine schnelle Entlüftung der Druckluftversorgungsanlage und Regeneration des Lufttrockners mit ggf. hoher Wiederholungsrate.

In einer besonders bevorzugten Ergänzung dieser Weiterbildung ist vorgesehen, dass in einer pneumatischen Verbindung in Befüllrichtung stromabwärts des Lufttrockners, d. h. druckluftanschlussseitig, eine erste Drossel angeordnet ist. Diese auch als Regenerationsdrossel zu bezeichnende Drossel weist vorteilhaft eine vergleichsweise kleine Nennweite auf. Dadurch lässt sich ein vergleichsweise großer Druckabfall, d.h. eine vergleichsweise große Druckwechselamplitude zur Regeneration des Lufttrockners, zur Verfügung stellen. Die erste Drossel ist vorzugsweise in einer Druckluftversorgungsleitung angeordnet.

In einer Weiterbildung hat es sich als vorteilhaft erwiesen, dass stromaufwärts auf der Entlüftungsseite des Lufttrockners und vor dem Primärventil eine zweite Drossel und/oder stromaufwärts auf der Entlüftungsseite des Lufttrockners und vor dem Sekundärventil eine dritte Drossel angeordnet ist. Es hat sich gezeigt, dass über die zweite und dritte Drossel eine Nennweite einer Entlüftungsleitung für unterschiedliche Funktionen vorteilhaft angepasst werden kann. Beispielweise kann in einer ersten Funktionsstellung beim Entlüften der Pneumatikanlage -durch zeitlich sequentielles Schalten des Primärventils und Sekundärventils- mit der zweiten und dritten Drossel eine übermäßige Akustik, insbesondere ein Entlüftungsknall, vermieden werden. Dennoch kann bereits über die erste Drossel eine ausreichende Regeneration des Lufttrockners gewährleistet sein. Insbesondere für diesen Anwendungsfall hat es sich als vorteilhaft erwiesen, dass wenigstens eine zweite und dritte Drossel eine Nennweite aufweist, die größer als die Nennweite der ersten Drossel ist. Insbesondere weist wenigstens die dritte Drossel eine Nennweite auf, welche größer als die Nennweite der ersten Drossel ist. Ausnahmsweise kann, insbesondere nur die zweite Drossel eine Nennweite aufweisen, die unterhalb der Nennweite der dritten Drossel liegt, um eine besonders verminderte Akustik zu gewährleisten, vorzugsweise für eine Hochdruckentlüftungsfunktion, z. B. um nur den Lufttrockner und die Galerie zu entlüften. Bei allen vorgenannten Weiterbildungen ist darüber hinaus vorteilhaft gewährleistet, dass die Summe der Nennweiten der zweiten und dritten Drossel über der Nennweite der ersten Drossel liegt.

In einer Weiterbildung kann die Nennweite der ersten Drossel die größte Nennweite sein, wobei zusätzlich die erste Drossel getaktet durchströmbar ist, d. h. eine Durchströmung der ersten Drossel nur unter schnellem Öffnen und Schließen derselben erfolgt. Damit wird im Prinzip die für eine Durchströmung relevante effektive Nennweite der ersten Drossel derart gesenkt, dass wiederum wenigstens die Summe der Nennweiten der zweiten und dritten Drossel oberhalb der effektiven Nennweite der ersten Drossel liegt.

Es hat sich insbesondere die Anordnung der ersten Drossel in einer Druckluftversorgungsleitung und die Anordnung der zweiten und dritten Drossel in einer Entlüftungsleitung als vorteilhaft erwiesen.

In einer zweiten Funktionsstellung, beispielsweise zum Absenken eines Fahrzeugs, kann ein praktisch gleichzeitiges Öffnen des Primärventils und Sekundärventils vorteilhaft sein, nämlich aufgrund der dann summarisch verfügbaren Nennweiten der zweiten und dritten Drossel. Dies führt regelmäßig zu einem unvermindert schnellen Absenken des Fahrzeugs, ohne dass eine übermäßige Akustik aufträte oder eine Regeneration des Lufttrockners nachteilig beeinflusst würde.

Im Rahmen einer besonders vorteilhaften Weiterbildung ist als ein auf das Primärventil und das Sekundärventil wirkendes Steuermittel der Magnetteil für das Primärventil und Sekundärventil gemeinsam ausgelegt, insbesondere das Steuermittel in Form eines auf beide wirkenden gemeinsamen Spulenkörpers und/oder Steuerleitung gebildet. Als dafür besonders geeignete konstruktive Realisierung hat sich ein Doppelanker-Magnetventil erwiesen, in dem das Primärventil und das Sekundärventil zusammen gebildet sein kann. Ganz allgemein kann das Primärventil und das Sekundärventil gemäß dieser Weiterbildung als ein Ventil in einem gemeinsamen Gehäuse ausgebildet sein, das einen ein erstes Dichtelement des Primärventils tragenden Primäranker und ein zweites Dichtelement des Sekundärventils tragenden Sekundäranker aufweist, die in einem gemeinsamen Spulenkörper angeordnet sind. Der Spulenkörper und die Anker bilden zusammen eine Spule im Rahmen des Magnetteils der Magnetventilanordnung. Vorteilhaft lässt sich bei einem Doppelanker-Magnetventil, z. B. mit steigendem Steuerstrom, der Primäranker und der Sekundäranker zeitlich sequentiell nacheinander anziehen. Zusätzlich kann jeweils eine Ventilfeder bei Primärventil bzw. Sekundärventil mit einer anderen unterschiedlichen Federkraft realisiert sein, so dass die Ventile zeitlich nacheinander, d.h. zunächst das Primär- dann das Sekundärventil, anziehen. Mittels eines einstellbaren Steuerstroms, für den eine Ankeranzugskraft alle vorgenannten Federkräfte übersteigt, lassen sich Primärventil und Sekundärventil auch gleichzeitig aktivieren.

In einer abgewandelten Weiterbildung weist das gemeinsame auf das Primärventil und das Sekundärventil wirkende Steuermittel des Magnetteils eine auf eine Spule des Primärventils und eine Spule des Sekundärventils gemeinsam wirkende Steuerleitung zur Übermittlung eines Steuerstroms auf. Grundsätzlich kann die Spule eine für Primärventil und Sekundärventil gemeinsame Spule sein, d. h. insbesondere einen für Primäranker und Sekundäranker gemeinsam gebildeten Spulenkörper aufweisen. In einer Variante kann das Primärventil und das Sekundärventil jeweils eine separate Spule aufweisen, d.h. vor allem einen separaten Spulenkörper, wobei die Spulenkörper mit einer gemeinsamen elektrischen Steuerleitung gekoppelt sind. In diesem Fall sieht die Weiterbildung vor, dass das Primärventil und das Sekundärventil in Form jeweils eines Einzelankermagnetventils in ggf. separatem Gehäuse gebildet ist, wobei die Einzelankerventile mit einer gemeinsamen elektrischen Steuerleitung gekoppelt sind. In beiden Varianten lässt sich das Primärventil und das Sekundärventil vorteilhaft zeitlich sequentiell durch einen ansteigenden Steuerstrom in der gemeinsamen elektrischen Steuerleitung aktivieren. In beiden Varianten lassen sich das Primärventil und das Sekundärventil gleichzeitig aktivieren, indem ein ausreichend hoher Steuerstrom in der gemeinsamen Steuerleitung zur Verfügung gestellt wird.

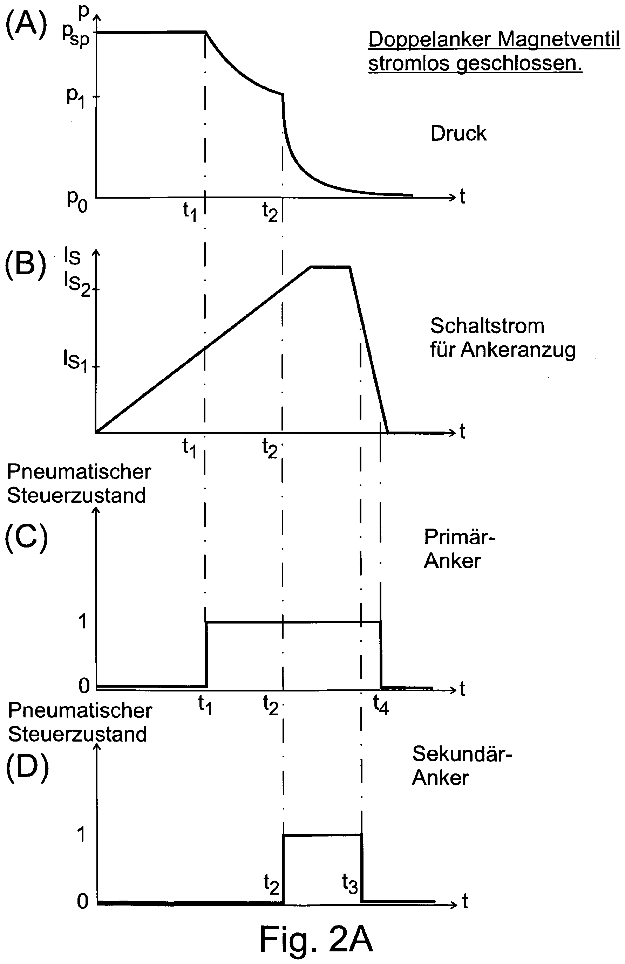

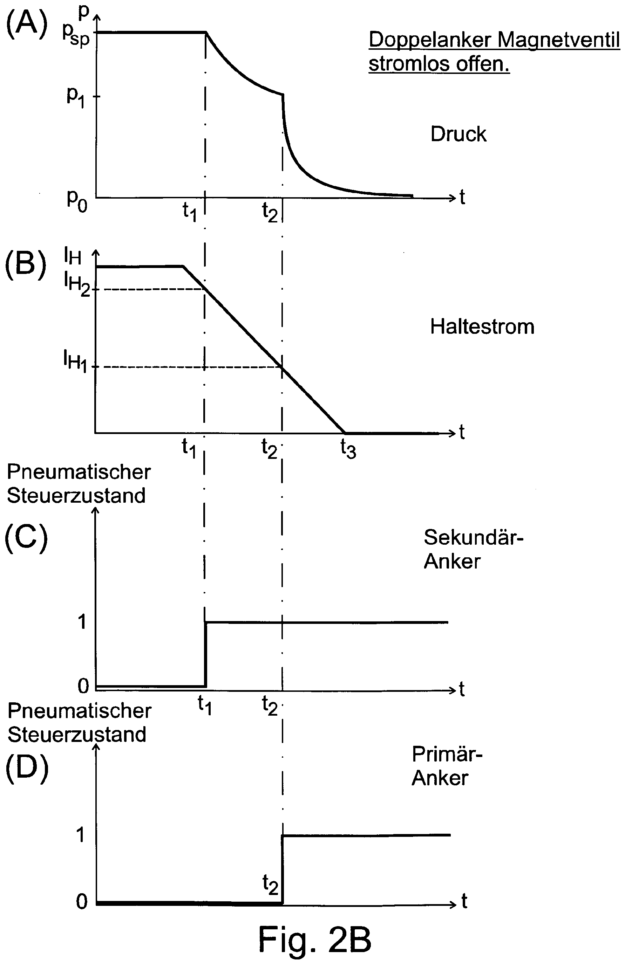

Zusammenfassend lässt sich ein Primärventil und/oder Sekundärventil sowohl durch geeignet ausgebildete Ventilfedern für die Anker aktivieren als auch durch geeignet ausgebildete Steuerströme für eine oder mehrere Spulen derselben. Eine beispielhafte Betriebsweise ist in Fig. 2 beschrieben.

Im Rahmen einer mit besonderem Vorteil versehenen Weiterbildung ist vorgesehen, das ein Trockenbehälter des Lufttrockners eine Wandung aufweist, die eine trockenmittelfreie Einbuchtung bildet, wobei die Magnetventilanordnung wenigstens teilweise in der Einbuchtung angeordnet ist. Besonders bevorzugt ist die Magnetventilanordnung vollständig in der Einbuchtung angeordnet. Es hat sich gezeigt, dass dadurch eine besonders platzsparende und gut geschützte Unterbringung der Magnetventilanordnung realisiert ist, die zudem der Trocknerfunktion und der Ventilfunktion zuträglich ist.

Das Konzept der Erfindung führt auch auf ein Verfahren gemäß dem Anspruch 16. Insbesondere ist bei dem Verfahren im Rahmen einer Weiterbildung vorgesehen, dass das Primärventil und das Sekundärventil der Magnetventilanordnung ausgebildet sind, in einem ersten Betriebsmodus zeitlich sequentiell mit einem über eine Stromamplitude ansteigenden Steuerstrom aktiviert zu werden. Dazu kann vorgesehen sein, dass der Steuerstrom zunächst nur eine Stromamplitude zur Aktivierung des Primärventils übersteigt und danach in einem Bereich verbleibt, der lediglich das Primärventil aktiviert hält, während das Sekundärventil nicht aktiviert ist. Zu einem späteren Zeitpunkt kann der Steuerstrom eine zweite Stromamplitude übersteigen, die ausreichend ist, auch das Sekundärventil zu aktivieren. Danach kann der Steuerstrom eine Stromamplitude aufweisen, die ausreichend ist, sowohl das Primär- als auch das Sekundärventil im aktivierten Zustand zu halten. Zum Deaktivieren des Sekundär- und Primärventils kann ein Steuerstrom, gegebenenfalls mit bekannter Hysterese, unter die genannten Stromamplituden gesenkt werden. In einem zweiten Betriebsmodus kann der Steuerstrom vergleichsweise schnell auf eine Stromamplitude ansteigen, die über einer Stromamplitude liegt, die ausreichend ist, das Primär- und das Sekundärventil gleichzeitig zu aktivieren. Dazu sollte die Stromamplitude oberhalb der größten Stromamplitude zur Aktivierung des Primär- und Sekundärventils liegen.

Ein Aktivieren des Primär- und/oder Sekundärventils kann insbesondere zum Ablassen von Luft aus einem Luftbalg erfolgen. Entsprechend kann Druckluft in einer Luftströmung über die Pneumatikleitung geführt werden. Eine Aktivierung eines Primär- oder Sekundärventils kann beispielsweise nach Maßgabe einer Höhenstandssteuerung des Fahrzeugs erfolgen. Dazu kann beispielsweise eine mit einer Höhenstandsvorgabe verbundene Luftmassenregelung vorgesehen sein, die einen Volumenstrom über die Pneumatikleitung steuert. Es kann auch eine Aktivierung des Primär- und/oder Sekundärventils zeitgesteuert erfolgen. Eine Zeitsteuerung empfiehlt sich beispielsweise, wenn eine Höhenstandsanzeige zu verrauscht ist. Eine zeitgesteuerte Aktivierung von Primär- und Sekundärventil kann beispielsweise auch im Rahmen eines Regenerationszyklus für die Druckluftversorgungsanlage erfolgen.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind dort wo sinnvoll, nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:
Fig. 1A - Fig. 1D Schaltungsdiagramme eines pneumatischen Systems mit einer Luftfederanlage und einer Druckluftversorgungsanlage gemäß vier bevorzugter Ausführungsformen, nämlich mit einem Primärventil und einem Sekundärventil einer Magnetventilanordnung - vorzugsweise als Doppelanker-Magnetventil - die stromlos geschlossen parallel (A) oder in Reihe (B), oder stromlos offen parallel (C) oder in Reihe (D) geschaltet sind;
Fig. 2A eine Graphik zu Steuerzuständen eines Primär- und Sekundärventils eines stromlos geschlossenen Doppelanker-Magnetventils mit zugeordneten Steuerströmen für die Ventile sowie Drücken in einer Entlüftungsleitung;
Fig. 2B eine zu Fig. 2A analoge Graphik für ein stromlos offenes Doppelanker-Magnetventil;
Fig. 3 eine symbolische Darstellung unterschiedlicher stromlos offen/stromlos geschlossen-Kombinationen für das Primärventil und das Sekundärventil des Pneumatikteils der Magnetventilanordnung im Rahmen der Druckluftversorgungsanlage der bevorzugten Ausführungsformen der Fig. 1A -Fig. 1D;
Fig. 4 eine symbolische Darstellung von Möglichkeiten einer Reihen- oder Parallelschaltung für ein Primärventil und ein Sekundärventil des Pneumatikteils der Magnetventilanordnung im Rahmen der Druckluftversorgungsanlage der bevorzugten Ausführungsformen der Fig. 1A - Fig. 1D;
Fig. 5 eine bevorzugte konstruktiv realisierte Ausführungsform einer Druckluftversorgungsanlage zur Verwendung in einem pneumatischen System gemäß der Fig. 1B mit einer Magnetventilanordnung in Form eines Doppelanker-Magnetventils, bei dem das Primärventil und das Sekundärventil in Reihe geschaltet sind;
Fig. 5A, Fig. 5B zwei bevorzugte abgewandelte Detailausführungen gemäß Detail X der Druckluftversorgungsanlage der Fig. 5 im Bereich des Doppelanker-Magnetventils;
Fig. 6 eine Darstellung dreier Funktionsstellungen des Primärventils und des Sekundärventils einer Magnetventilanordnung der Druckluftversorgungsanlage der Fig. 5, nämlich einer (a) beidseitig stromlos geschlossenen Stellung, einer (b) bestromt primärseitig offenen und sekundärseitig gedrosselten Stellung und einer (c) bestromt beidseitig offenen Stellung.
Fig. 7 eine bevorzugte konstruktiv realisierte Ausführungsform einer Druckluftversorgungsanlage zur Verwendung in einem pneumatischen System gemäß der Fig. 1A mit einer Magnetventilanordnung in Form eines Doppelanker-Magnetventils, bei der das Primärventil und das Sekundärventil parallel geschaltet sind.

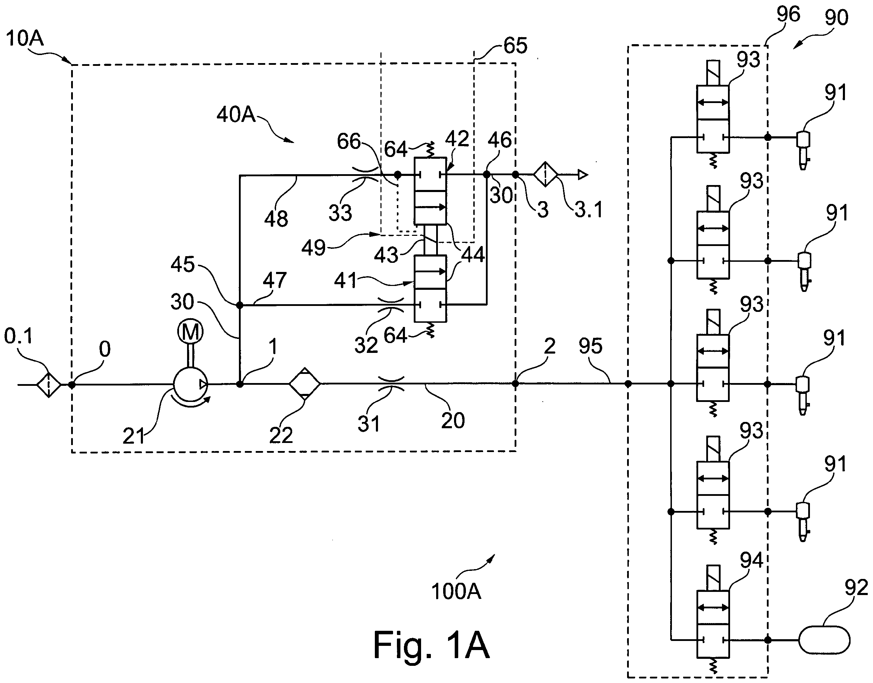

Fig. 1A bis Fig. 1D zeigen jeweils ein pneumatisches System 100A, 100B, 100C, 100D mit einer Druckluftversorgungsanlage 10A, 10B, 10C, 10D und einer Pneumatikanlage 90 vorliegend in Form einer Luftfederanlage. Für identische oder ähnliche Teile oder Teile identischer oder ähnlicher Funktion sind zweckmäßig gleiche Bezugszeichen verwendet. Die Luftfederanlage weist eine Anzahl von vier sogenannten Bälgen 91 auf, die jeweils einem Rad eines nicht näher dargestellten Fahrzeugs zugeordnet sind sowie einen Speicher 92 zur Speicherung schnell verfügbarer Druckluft für die Bälge 91. Die Bälge 91 und der Speicher 92 sind, vorliegend in einem Ventilblock 96 von fünf Ventilen, jeweils über ein stromlos geschlossenes Magnetventil 93, 94 - für die Bälge 91 als Balgventil bzw. für den Speicher 94 als Speicherventil - an eine gemeinsame eine Galerie 95 bildende Pneumatikleitung angeschlossen, welche auch die pneumatische Verbindung zwischen der Druckluftversorgungsanlage 10A, 10B, 10C, 10D und der Pneumatikanlage 90 bildet. Der Ventilblock 96 kann in einer abgewandelten Ausführungsform andere oder weniger Magnetventile aufweisen z.B. in einem 2-fach Ventilblock angeordnete Magnetventile aufweisen. Unter einer Galerie ist ganz allgemein jede Art einer Sammelleitung zu verstehen, von welcher Zweigleitungen zu Bälgen 91 und/oder einem Speicher 92 und/oder zur Druckluftversorgungsanlage 10A, 10B, 10C, 10D abgehen.

Die Druckluftversorgungsanlage 10A, 10B, 10C, 10D dient zum Betreiben der Pneumatikanlage 90 in Form der Luftfederanlage und versorgt die Galerie 95 derselben über einen Druckluftanschluss 2. Die Druckluftversorgungsanlage 10A, 10B, 10C, 10D weist außerdem eine Entlüftungsanschluss 3 und eine Luftzuführung 0 mit einer Luftansaugung auf. In Befüllrichtung stromabwärts des Druckluftanschlusses 2 ist die Luftfederanlage mit den steuerbaren Magnetventilen 93, 94 angeordnet. Dem Entlüftungsanschluss 3 in Entlüftungsrichtung stromabwärts nachgeschaltet bzw. der Luftzuführung 0 entgegen Befüllrichtung stromaufwärts vorgeschaltet ist jeweils ein Filter 3.1 bzw. 0.1.

In einer pneumatischen Verbindung zwischen Luftzuführung 0 und Druckluftzuführung 1 weist die Druckluftversorgungsanlage 10A, 10B, 10C, 10D darüber hinaus einen Luftverdichter 21 in Form eines Kompressors auf, der -über einen Motor M angetrieben- zur Versorgung der Druckluftzuführung 1 mit Druckluft vorgesehen ist. In einer pneumatischen Verbindung zwischen Druckluftzuführung 1 und Druckluftanschluss 2 ist weiter ein Lufttrockner 22 und eine erste Drossel 31, hier als Regenerationsdrossel, angeordnet. Der Filter 0.1, die Luftzuführung 0, der Luftverdichter 21, die Druckluftzuführung 1, der Lufttrockner 22 und die erste Drossel 31 sind zusammen mit dem Druckluftanschluss 2 in einer Druckluftversorgungsleitung 20 in dieser Reihenfolge angeordnet, welche die pneumatische Verbindung zur Galerie 95 bildet.

In einer pneumatischen Verbindung zwischen Druckluftzuführung 1 und Entlüftungsanschluss 3 der Druckluftversorgungsanlage 10A, 10B, 10C, 10D ist eine Entlüftungsventilanordnung in Form einer steuerbaren Magnetventilanordnung 40A, 40B, 40C, 40D mit einem Magnetteil 43 und einem Pneumatikteil 44 zum Ablassen von Luft zu dem Entlüftungsanschluss 3 vorgesehen. Die Magnetventilanordnung 40A, 40B, 40C, 40D ist in einer die pneumatische Verbindung bildenden Entlüftungsleitung 30 angeordnet. Dem Konzept der Erfindung folgend weist der Pneumatikteil 44 der Magnetventilanordnung 40A, 40B, 40C, 40D ein Primärventil 41 und ein Sekundärventil 42 auf.

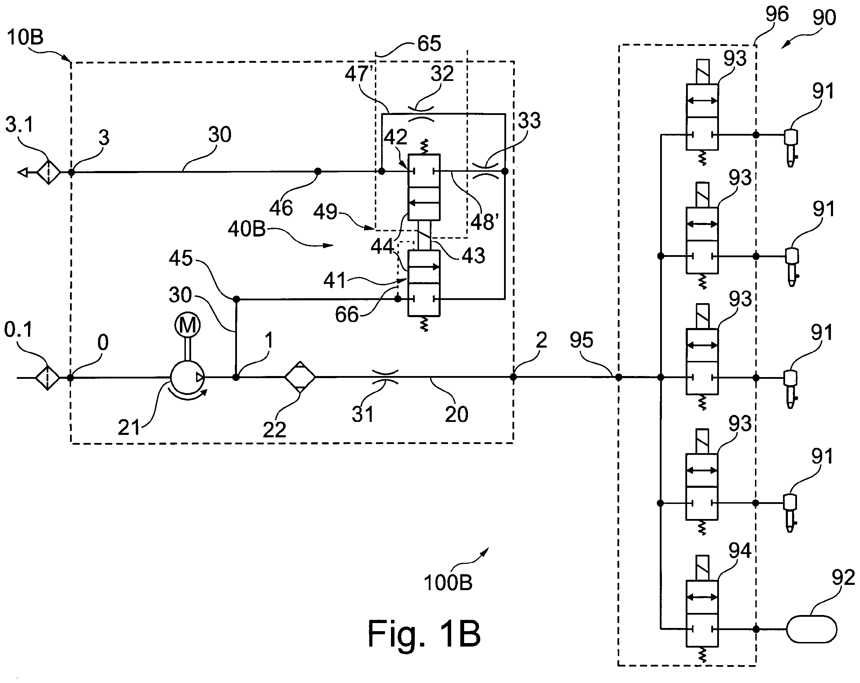

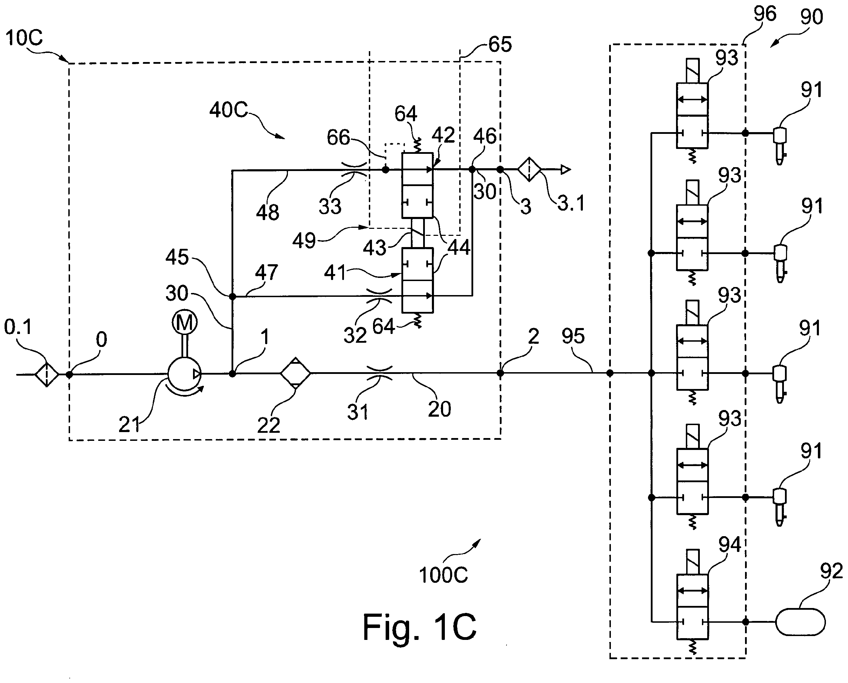

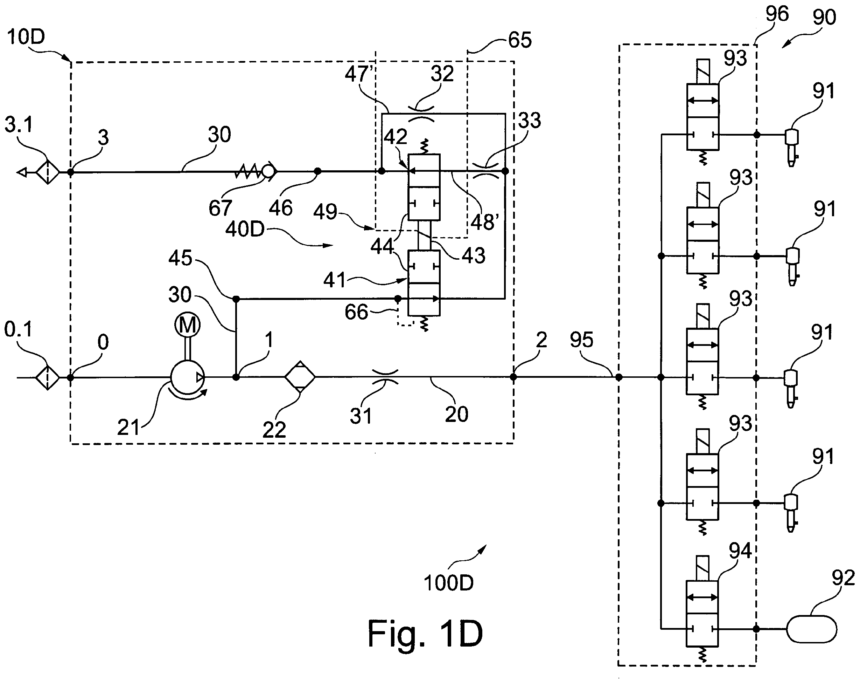

In der Ausführungsform der Fig. 1A ist ein Primärventil 41 und ein Sekundärventil 42 als stromlos geschlossene Magnetventile und parallel geschaltet ausgebildet. In der Ausführungsform der Fig. 1C sind ein Primärventil 41 und ein Sekundärventil 42 als stromlos offene Magnetventile ausgebildet und parallel geschaltet. In der Ausführungsform der Fig. 1B und der Fig. 1D sind ein Primärventil 41 und ein Sekundärventil 42 in Reihe geschaltet - bei Fig. 1B stromlos geschlossen, bei Fig. 1D stromlos offen.

Die Magnetventilanordnung 40A, 40B, 40C, 40D hat eingangs einen einzigen pneumatischen druckluftanschlussseitigen Anschluss 45 und ausgangs einen einzigen pneumatischen entlüftungsseitigen Anschluss 46. Mit Vorteil versehen ist ein druckluftanschlussseitiger Leitungsabschnitt der Entlüftungsleitung 30 - also vor dem druckluftanschlussseitigen Anschluss 45- an der Druckquelle 1 zur pneumatischen Anbindung der Magnetventilanordnung 40A, 40B, 40C, 40D an die Druckluftversorgungsleitung 20 angeschlossen. Dies hat zur Folge, dass im Falle einer Entlüftung der Druckluftversorgungsanlage 10A, 10B, 10C, 10D über die Entlüftungsleitung 30 Druckluft entlüftet wird, welche in Befüllrichtung stromaufwärtig vor dem Lufttrockner 22 entnommen wird, also - vereinfacht ausgedrückt - ungetrocknete Luft.

Konkret ist bei den Parallelschaltungen der Magnetventilanordnung 40A, 40C in der Fig. 1A und Fig. 1C das Primärventil 41 und das Sekundärventil 42 jeweils zwischen zwei dem Primärventil 41 und dem Sekundärventil 42 gemeinsamen pneumatischen Anschlüssen 45, 46 geschaltet. Vorliegend werden also zwei dem Primär- und Sekundärventil 41, 42 gemeinsame Pneumatikkammern in der Entlüftungsleitung 30 gebildet - jeweils durch Leitungsabschnitte der Entlüftungsleitung 30 zwischen der Druckluftzuführung 1 und Magnetventilanordnung 40A, 40C einerseits und zwischen der Magnetventilanordnung 40A, 40C und der Entlüftung 3 andererseits gebildet. Ein pneumatischer Anschluss 45 zur Druckluftzuführung 1 und ein pneumatischer Anschluss 46 zum Entlüftungsanschluss 3 dient somit in einer einzigen gemeinsamen Leitung -nämlich hier der Entlüftungsleitung 30- zur Bildung zweier dem Primärventil 41 und dem Sekundärventil 42 gemeinsamen Pneumatikkammern.

Zwischen dem Primärventil 41 und dem druckluftanschlussseitigen Anschluss 45 ist eine zweite Drossel 32 vorgesehen. Zwischen dem Sekundärventil 42 und dem druckluftanschlussseitigen Anschluss 45 ist eine dritte Drossel 33 vorgesehen. Bei den Parallelschaltungen der Magnetventilanordnung 40A, 40C ist die zweite Drossel 32 ebenso wie das Primärventil 41 in einer ersten Zweigleitung 47 der Entlüftungsleitung 30 zwischen den Anschlüssen 45, 46 angeordnet. Die dritte Drossel 33 ist ebenso wie das Sekundärventil 42 in einer zweiten Zweigleitung 48 der Entlüftungsleitung 30 zwischen den Anschlüssen 45, 46 angeordnet. Die erste und zweite Zweigleitung 47, 48 münden jeweils zusammen am gemeinsamen Anschluss 45 bzw. am gemeinsamen Anschluss 46 in der Entlüftungsleitung 30. Die zweite und dritte Drossel 32, 33 bilden insofern jeweils eine Entlüftungsdrossel.

Konkret ist bei den Reihenschaltungen der Magnetventilanordnung 40B, 40D in der Fig. 1B und Fig. 1D die zweite Drossel 32 in einem separaten Leitungsabschnitt 47' der Entlüftungsleitung 30 -als Bypass zum Sekundärventil 42 parallel zum Leitungsabschnitt 48' der Entlüftungsleitung 30- zwischen Anschluss 46 und Primärventil 41 angeordnet. Die dritte Drossel 33 ist in dem Leitungsabschnitt 48' der Entlüftungsleitung 30 zwischen dem Primärventil 41 und dem Sekundärventil 42 angeordnet.

Grundsätzlich kann in allen Fällen die erste, zweite und dritte Drossel 31, 32, 33 durch Leitungsverengungen, feine Öffnungsquerschnitte oder dgl. integral mit einer Leitung gebildet sein. Die zweite und dritte Drossel 32, 33 können zusätzlich oder alternativ auch durch eine Nennweite eines Ventilsitzes gebildet sein. Die erste, zweite und dritte Drossel 31, 32, 33 können zusätzlich oder alternativ auch durch ein separates Bauteil in der Druckluftversorgungsleitung 20 bzw. der Entlüftungsleitung 30 gebildet sein.

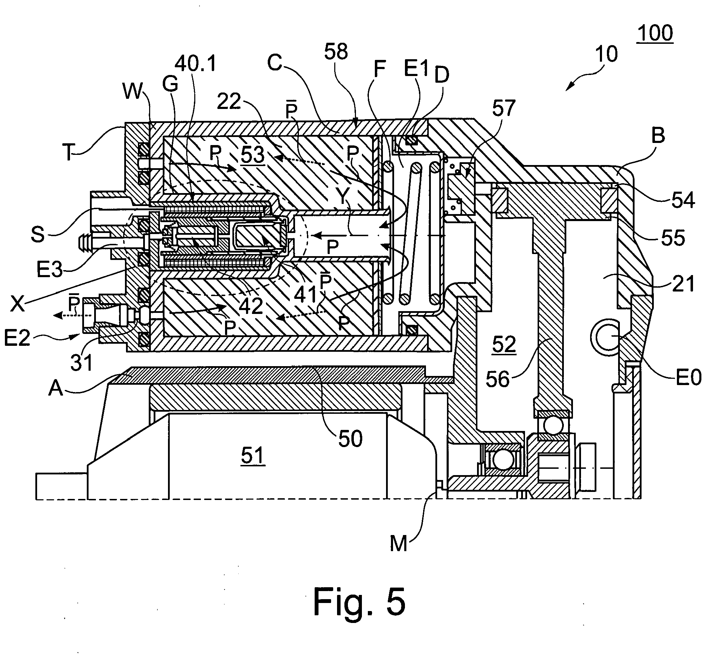

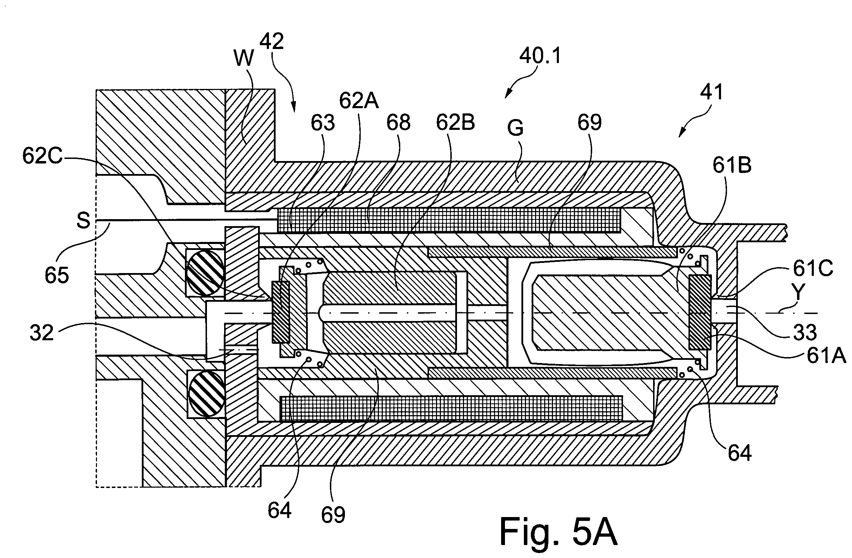

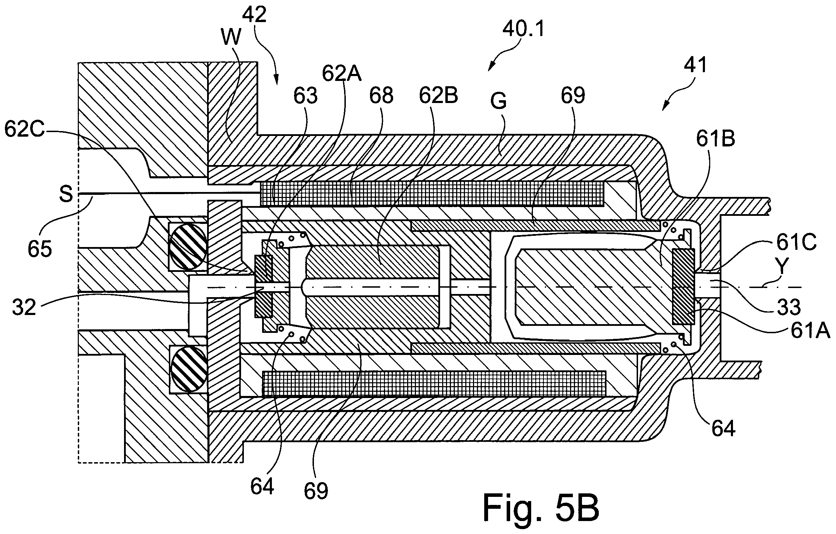

Konkret ist bei den Parallelschaltungen der Magnetventilanordnung 40A, 40C in der Fig. 1A und Fig. 1C das Primärventil 41 der Magnetventilanordnung 40B, 40D und das Sekundärventil 42 der Magnetventilanordnung 40A, 40C jeweils mit einem Druckbegrenzer 66 versehen. Vorliegend wirken zur Druckbegrenzung unter Abtastung eines Leitungsdruckes eine hier nur symbolisch und in Fig.5 ff. näher gezeigte und so bezeichnete Ventilfeder 64 und ein Primäranker 61B bzw. Sekundäranker 62B des Primärventils 41 bzw. des Sekundärventils 42 zusammen. Eine Druckbegrenzung hält den Lufttrockner bis zu einem vergleichsweise hohen Druck dicht. Vermieden wird dadurch eine Überladung einer Pneumatikanlage im Fehlerfall, wie er beispielsweise durch einen Relaiskleber, d. h. ein nicht abschaltendes Relais für den Motor des Luftverdichters 21, verursacht werden kann.

Konkret ist weiter bei der Druckluftversorgungsanlage 10D mit einer Reihenschaltung von stromlos offenem Primärventil 41 und Sekundärventil 42 der Magnetventilanordnung 40D in der Fig. 1D in einer Entlüftungsleitung 30 ein Restdruckhalteventil 67 vorgesehen. Eine grundsätzlich für jede der beschriebenen Druckluftversorgungsanlagen 10A, 10B, 10C, 10D -insbesondere Druckluftversorgungsanlage 10B mit stromlos offenem Primärventil 41 und Sekundärventil 42- optionale Restdruckhaltefunktion dient vor allem dazu, ein Zusammenfalten von Bälgen 91 einer Pneumatikanlage 90 in bestimmten Fällen zu vermeiden. Ein solcher Fall kann z.B. nach dem Absetzen eines Fahrzeugs von einer Hebebühne auftreten, bei dem es regelmäßig erforderlich sein kann, dass in den Bälgen 91 ein gewisser Restdruck verbleibt.

Der Magnetteil 43 der Magnetventilanordnung 40A, 40B, 40C, 40D umfasst vorliegend ein gemeinsames auf das Primärventil 41 und das Sekundärventil 42 gleichermaßen wirkendes Steuermittel 49 des Magnetteils 43, mit dem sowohl das Primärventil 41 als auch das Sekundärventil 42 aktivierbar ist.

Vorliegend ist das gemeinsam auf das Primärventil 41 und das Sekundärventil 42 wirkende Steuermittel 49 des Magnetteils 43 mit einem auf beide wirkenden gemeinsamen Spulenkörper 63 und Steuerleitung 65 gebildet. Als Teil eines gemeinsamen Steuermittels 49 ist die Spule in Fig. 1A bis Fig. 1D symbolisch als Magnetteil 43 für den Pneumatikteil 44 eines Doppelanker-Magnetventils dargestellt. Besonders vorteilhafte Ausführungsformen einer konstruktiven Realisierung sind in Fig. 5 bis Fig. 8 gezeigt, auf die im Folgenden bereits teilweise Bezug genommen wird. In einer anderen Ausführungsform kann ein abgewandeltes Steuermittel die für das Primärventil 41 und Sekundärventil 42 gemeinsame Steuerleitung 65 zur Übermittlung eines für Primär- und Sekundärventil 41, 42 unterschiedlichen Steuerstroms umfassen, wobei für beide Ventile gemeinsame oder auch separate Spulen vorgesehen sein können.

Eine hier nicht dargestellte Abwandlung des gemeinsamen Steuermittels 49 nutzt die gemeinsame Steuerleitung 65 insbesondere für einen Schwellsteuerstrom, der für das Primärventil 41 und das Sekundärventil 42 unterschiedlich eingestellt ist. So können auch als Einzelankermagnetventile ausgebildeten Ventile -d. h. mit jeweils separaten Spulen einer Magnetventilanordnung- nach Erreichen eines jeweiligen Schwellsteuerstroms, zeitgleich oder sequentiell geschaltet werden. Mit anderen Worten -unabhängig von der gewählten Ausführungsform oder Abwandlung- ist das gemeinsam auf das Primärventil 41 und das Sekundärventil 42 wirkende Steuermittel 49 des Magnetteils 43 derart ausgelegt, dass das Primärventil 41 und das Sekundärventil 42 wahlweise gleichzeitig oder nacheinander aktivierbar sind.

Aus der Darstellung der Ausführungsform der Fig. 1A bis Fig. 1D ist bereits erkennbar, dass die Druckluftversorgungsanlage 10A, 10B, 10C, 10D mit einer Magnetventilanordnung 40A, 40B, 40C, 40D in Form einer direkt gesteuerte Entlüftungs-Magnetventilanordnung versehen ist, mit der eine direkte Schaltung des gesamten Druckluftvolumens möglich ist. Vorliegend sieht die Magnetventilanordnung 40A, 40B, 40C, 40D jeweils einzig das Primärventil 41 und das Sekundärventil 42 als Entlüftungsventile in der Entlüftungsleitung 30 vor; ein Steuerventil ist jeweils nicht erforderlich. Die Ausführung als eine direkt gesteuerte Entlüftungs-Magnetventilanordnung erlaubt eine schnelle und flexible Entlüftung der Pneumatikanlage 90 bzw. der Druckluftversorgungsanlage 10A, 10B, 10C, 10D ohne ein zusätzliches und ggf. verzögerndes Steuerventil. Darüber hinaus spart diese Ausführung vorteilhaft Bauteile und Bauraum. Auch sind vorteilhaft praktisch keine Anforderungen an einen Mindestvorsteuerdruck zum Betrieb der Druckluftversorgungsanlage 10A, 10B, 10C, 10D erforderlich. Dadurch lässt sich eine flexible Funktionsweise auch im Hinblick auf den Lufttrockner 22 mit dem vorliegend beschriebenen Konzept einer Druckluftversorgungsanlage realisieren.

Bei der Magnetventilanordnung 40A, 40B, 40C 40D ist vorliegend das Primärventil 41 mit einer kleineren Nennweite vorgesehen als das Sekundärventil 42. Zusätzlich oder alternativ ist die für den pneumatischen Betrieb relevante Nennweite der ersten Drossel 31 im Verhältnis zur Nennweite der zweiten Drossel 32 und im Verhältnis zur Nennweite der dritten Drossel 33 derart organisiert, dass eine Nennweite der ersten Drossel 31 in jedem Fall unterhalb der Summe der Nennweiten der zweiten und dritten Drossel 32, 33 liegt. Vorzugsweise liegt die Nennweitensumme der zweiten und dritten Drossel 32, 33 oberhalb der doppelten Nennweite der ersten Drossel 31. Die dritte Drossel 33 kann die größte Nennweite haben oder auch eine Nennweite mittlerer Größe, d.h. zwischen der der ersten und zweiten Drossel 31, 32 liegen. Die Nennweite der zweiten Drossel 32 kann eine mittlere Nennweite zwischen der ersten Drossel 31 und der dritten Drossel 33 haben oder auch die kleinste Nennweite haben. Letzteres gilt insbesondere, um mit der Drossel 32 einen Entlüftungsknall möglichst effektiv zu vermindern. Grundsätzlich hat diese Nennweitenorganisation den Vorteil, dass -je nach Zweck der Entlüftung- zeitgleich oder sequentiell eine Freigabe von gleichen oder unterschiedlichen Nennweiten in der Entlüftungsleitung 30 der Druckluftversorgungsanlage 10A, 10B, 10C, 10D erfolgen kann.

Unter Bezug auf Fig. 2A und Fig.2B können - unabhängig von der konstruktiven Realisierung eines auf das Primärventil 41 und das Sekundärventil 42 - gemeinsamen wirkenden Steuermittels 49, das Primärventil 41 und das Sekundärventil 42 -beispielsweise durch unterschiedliche Einstellung von Federkräften der Ventilfedern 64 oder durch Einstellung unterschiedlicher Schwellströmeinnerhalb eines spezifizierten Bereichs gleichzeitig oder sequentiell geschaltet werden.

Grundsätzlich kann -wie im Folgenden im einzelnen erläutert- das Primärventil 41 und das Sekundärventil 42 der Magnetventilanordnung 40.1, 40.2, 40A, 40B, 40C, 40D in einem ersten Betriebsmodus zeitlich sequentiell -mit einem zunächst einen ersten Schwellwert durchschreitenden Steuerstrom und nach einer betriebsabhängigen Zeitdauer mit einem danach einen zweiten Schwellwert durchschreitenden Steuerstrom- aktiviert werden. Unter einem Steuerstrom ist nach Fig.2A ein Schaltstrom I_{S} und nach Fig.2B ein Haltestrom I_{H} zu verstehen. Unter einem Schwellwert ist entsprechend ein erster Schalt- oder Haltestrom I_{S1} , I_{H1} bzw. ein zweiter Schalt- oder Haltestrom I_{S2}, I_{H2} zu verstehen. Grundsätzlich kann, zusätzlich oder alternativ, das Primärventil 41 und das Sekundärventil 42 der Magnetventilanordnung 40.1, 40.2, 40A, 40B, 40C, 40D in einem zweiten Betriebsmodus gleichzeitig mit einem sowohl das Primärventil 41 als auch das Sekundärventil 42 aktivierenden Schwellwert durchschreitenden Steuerstrom aktiviert werden. Der Steuerstrom ist dabei als ein Schalt- oder Haltestrom I_{S}, I_{H} derart gewählt, dass alle Schwellwerte, d.h. ein erster Schalt- oder Haltestrom I_{S1}, I_{H1} und ein zweiter Schalt- oder Haltestrom I_{S2}, I_{H2} gleichzeitig durchschritten werden.

Besonders bevorzugt kann dadurch erreicht werden, dass mittels dem gemeinsamen auf Primärventil 41 und Sekundärventil 42 wirkenden Steuermittel 49 bei Durchschreiten eines ersten Schwellwertes, d.h. I_{S1}, I_{H1}, eine erste Entlüftungsdrossel in Form der zweiten Drossel 32 -alternativ in Form der dritten Drossel 33- in der Entlüftungsleitung 30 betätigt wird. Besonders bevorzugt kann dadurch erreicht werden, dass bei Durchschreiten eines zweiten Schwellwertes, d.h. I_{S2}, I_{H2}, zusätzlich eine zweite Entlüftungsdrossel in Form der dritten Drossel 33 -alternativ in Form der zweiten Drossel 32- in der Entlüftungsleitung 30 betätigt wird.

Die weiter angepasst auf die Nennweiten des Primärventils 41 und Sekundärventils 42 vorgesehenen Nennweiten der zweiten Drossel 32 und der dritten Drossel 33 erlauben zudem eine vorteilhafte Entlüftung unter Vermeidung des oben genannten Entlüftungsknalls. Ein Entlüftungsknall könnte auftreten, wenn ein zu großes Druckluftvolumen unter zu hohem Druck in geringer Zeit entlüftet würde. Eine Regeneration des Lufttrockners 22 bei einem je nach Funktion vorteilhaft ausgelegten Druckniveau wird durch das vergleichsweise kleine Nennweitenmaß der ersten Drossel 31 zu wenigstens einer der Drosseln 32, 33 sichergestellt. Dadurch wird im Betrieb an der ersten Drossel 31 ein ausreichend großer Druckabfall realisierbar, der zum Abtransport von Feuchtigkeit im Lufttrockner 22 zu nutzen ist. Grundsätzlich hat es sich als vorteilhaft erwiesen, einen Nennweitenabstand der Nennweite der dritten Drossel 33 oder der zweiten Drossel 32 zur Nennweite der ersten Drossel 31 möglichst groß zu gestalten.

Es wurde erkannt, dass eine Regeneration des Lufttrockners 22 desto besser erfolgen kann je größer der Nennweitenabstand ist. Dadurch kann in verbesserter Weise ein vergleichsweise großer Druckabfall realisiert werden und damit eine ausreichend hohe Druckwechselamplitude. Um darüber hinaus - zusätzlich zu einer optimalen Regenration - auch eine optimierte Akustik für eine Entlüftung oder Regeneration zu realisieren, nämlich insbesondere einen Entlüftungsknall zu vermeiden, sieht das mit dieser Ausführungsform realisierte Konzept eine zweite Drossel 32 vor. Diese hat vorliegend eine vorteilhaft optimierte Nennweite, welche die Funktion der ersten Drossel 31 und der dritten Drossel 33 vorteilhaft ergänzt. Dazu kann diese vorteilhaft zwischen der Nennweite der ersten Drossel 31 und der dritten Drossel 33 liegen. Insbesondere bei Druckluftversorgungsanlagen zur Anwendung bei einem SUV ist dies vorteilhaft. Ggf. kann die Nennweite der zweiten Drossel 32 auch unter der Nennweite der ersten Drossel 31 liegen. Vorteilhaft ist bei beiden Abwandlungen, jedenfalls aber bei der letzteren, die Nennweite der dritten Drossel 33 die größte.

Exemplarisch sei dazu die Nennweitenauslegung der Drosseln 31, 32, 33 anhand von zwei Beispielen erläutert. In beiden Fällen ist ein Nennweitenmaß für die zweite Drossel 32 nach oben beschränkt, da bei Entlüftung sonst die Gefahr eines Entlüftungsknalls besteht. Auch ist ein Nennweitenmaß der zweiten Drossel 32 nach unten beschränkt, da es sonst nicht möglich ist, bei laufendem Luftverdichter 21 dennoch den Druck in der Druckluftversorgungsanlage 10A, 10B, 10C, 10D über die zweite Drossel 32 abzusenken. Dies führt in beiden Beispielen dazu, dass eine Nennweite der zweiten Drossel 32 nicht unter 1,0 mm und nicht über 1,4 mm liegen sollte. Als weitere Bedingung in den beiden Beispielen ist vorgegeben, dass die Nennweitensumme der Nennweiten der zweiten Drossel 32 und der dritten Drossel 33 größer ist als das Doppelte der Nennweite der ersten Drossel 31.

Dies vorausgesetzt betrifft ein erstes Beispiel eine Nennweitenauslegung, die für das Entlüften bei vergleichsweise hohem Druck sinnvoll ist. Die Nennweite der ersten Drossel kann praktisch auf eine optimierte Regeneration des Lufttrockners 22 ausgelegt werden. Ein mit Druckluft befüllter Lufttrockner 22 macht einen bedeutenden Teil eines Druckluftvolumens aus. Darüber hinaus beeinflusst die Nennweite der ersten Drossel 31 ein Absenken des Fahrzeugs mittels Ablassen von Luft aus den Bälgen 91 entscheidend, was ein Nennweitenmaß der ersten Drossel 31 nach unten begrenzt. Bei festgelegtem Nennweitenmaß der ersten Drossel 31 unter Abwägung von Trocknerregeneration und Absenkfunktion sind vorliegend die Nennweiten der zweiten und dritten Drossel 32, 33 wie oben aufgeführt, optimiert auf die Nennweite der ersten Drossel 31 angelegt. Demzufolge kann ein Absenken eines Fahrzeugs unter Entleerung des Lufttrockners 22 sowie dessen Regeneration mit vergleichsweise großer Nennweitensumme der Nennweiten der zweiten Drossel 32 und der dritten Drossel 33 erfolgen. Im Ergebnis kann dann die Nennweite der ersten Drossel 31 möglichst klein gegenüber der Nennweitensumme der Nennweiten der zweiten Drossel 32 und der dritten Drossel 33 ausgelegt werden.

Für den Fall, dass die Nennweite der zweiten Drossel vor allem zur Verminderung eines Entlüftungsknalls bei einer "Auffüllen-Ende-Aktion" dient, kann die Nennweite der zweiten Drossel 32 praktisch ausschließlich auf die Akustik zugeschnitten werden. Dazu kann die Drossel 32 praktisch die Funktion eines Hochdruckentlüftungsventils übernehmen. In diesem Beispiel kann die Nennweite der ersten Drossel beispielsweise 3,2 mm betragen und es hat sich darüber hinaus als vorteilhaft erwiesen, dass die Nennweitensumme der Nennweite der zweiten Drossel 32 und der Nennweite der dritten Drossel 33 mindestens das Doppelte der Nennweite der ersten Drossel 31 erreichen. Aufgrund der Begrenzung der Nennweite der zweiten Drossel 32 nach oben, vorliegend auf einen Wert unterhalb von 1,4 mm, um einen Entlüftungsknall sicher zu vermeiden, ist für diesen Fall die Nennweite der dritten Drossel 33 sehr groß auszulegen, nämlich auf wenigstens 5 mm, damit die Nennweitensumme größer als das Doppelte der Nennweite der ersten Drossel 31 beträgt. In dem Fall liegt die Nennweite der zweiten Drossel 32 also deutlich unter der Nennweite der ersten Drossel 31.

In dem zweiten Beispiel kann für eine verbesserte Regeneration des Lufttrockners 22 die Nennweite der ersten Drossel 31 wesentlich geringer gewählt werden, beispielsweise bei 0,8 mm. In dem Fall kann unter Beachtung des vorteilhaften Nennweitenbereichs für die zweite Drossel 32 zwischen 1,0 und 1,4 mm die Nennweite der zweiten Drossel 32 größer als die Nennweite der ersten Drossel 31 gewählt werden, beispielsweise bei 1,4 mm. Um dennoch eine möglichst effektive Entlüftung zu gewährleisten, ist wieder die Nennweitensumme der zweiten und dritten Drossel größer als die doppelte Nennweite der ersten Drossel 31 zu wählen. Für das zweite Beispiel kann dann die Nennweite der dritten Drossel 33 größer als 0,7 mm gewählt werden. Letzteres Maß lässt sich noch vergleichsweise einfach herstellen und ist gerade noch ausreichend unanfällig gegen Verschmutzung. Vorteilhaft ist es vorliegend die Nennweite der dritten Drossel 33 ähnlich wie die Nennweite der zweiten Drossel 32 zu wählen, also z. B. bei 1,4 mm.

In beiden vorgenannten Beispielen dient ein Primärventil 41 mit zugeordneter zweiten Drossel 32, vornehmlich einer Hochdruckentlüftungsfunktion und ein Sekundärventil 42 mit zugeordneter dritten Drossel 33, einer Restentlüftungsfunktion, wobei dennoch eine optimierte Regeneration des Lufttrockners 22 gewährleistet ist. Darüber hinaus garantiert die Wahl der Nennweite der ersten Drossel 31 eine optimierte Regeneration des Lufttrockners 22 bei dennoch bester Absenkfunktion für ein Fahrzeug.

Es hat sich insgesamt gezeigt, dass mit der vorliegenden Anordnung und den beschriebenen Nennweiten-Relationen der ersten, zweiten und dritten Drossel 31, 32, 33 ein Entlüftungsknall sicher vermieden ist und dennoch eine verbesserte Regeneration des Lufttrockners 22 erfolgen kann. Die Anordnung der zweiten Drossel 32 in einer Entlüftungsleitung 30 -d. h. (im Falle einer Parallelschaltung) in einer ersten Zweigleitung 47 der Entlüftungsleitung 30 oder (im Falle einer Reihenschaltung) zwischen Primärventil 41 und Anschluss 46 im separaten Leitungsabschnitt 47' als Bypass- hat sich als besonders vorteilhaft erwiesen. Im Falle einer Reihenschaltung eines Primär- und Sekundärventils 41, 42 ist die Nennweitensumme der zweiten Drossel 32 und dritten Drossel 33 immer größer als die Nennweite, vorzugsweise doppelte Nennweite, der ersten Drossel 31. Besonders vorteilhaft ist die Wahl der Nennweite der ersten Drossel 31 als kleinste Nennweite.

Insbesondere ist für eine Entlüftung der Druckluftversorgungsanlage 10A, 10B, 10C, 10D nach Erreichen des Speicherenddrucks, d. h. beim Erreichen des sogenannten Speicherfüllen-Endes, die zweite Drossel 32 derart dimensioniert, dass ein unter Hochdruck stehender Druckluftinhalt des Lufttrockners 22 möglichst leise in die Umgebung abgegeben wird. Die folgenden Ausführungen beziehen sich zunächst auf eine Druckluftversorgungsanlage 10A, 10C mit einer Parallelschaltung von Primärventil 41 und Sekundärventil 42, gelten aber in der daraus ableitbaren allgemeinen Lehre grundsätzlich auch für eine Druckluftversorgungsanlage 10B, 10D.

Die Darstellung eines beispielhaften Betriebs einer Druckluftversorgungsanlage 10A, 10B mit stromlos geschlossener Magnetventilanordnung 40A, 40B. Im Folgenden wird auf Fig. 2A Bezug genommen. Die Druckluftzuführung 1 wird zunächst durch Ansaugen von Luft über den Filter 0.1 und die Luftzuführung 0 mit Druckluft versorgt, indem der über den Motor M angetriebene Luftverdichter 21 die angesaugte Luft komprimiert. Die Pneumatikanlage 90 in Form der Luftfederanlage wird aus der Druckluftzuführung 1 über den Lufttrockner 22 und die erste Drossel 31 mit Druckluft versorgt. Dazu ist die Druckluftversorgungsleitung 20 der Druckluftversorgungsanlage 10A, 10C über den Druckluftanschluss 2 mit der Galerie 95 im Ventilblock 96 der Pneumatikanlage 90 verbunden.

Für ein etwaiges Entlüften der Bälge 91 mit einem Balgdruck p_{B} werden ein Primärventil 41 und ein Sekundärventil 42 der Druckluftversorgungsanlage 10A, 10B regelmäßig voll geöffnet und erst anschließend wird ein Magnetventil 93 als Niveauregelventil für einen Balg 91 geschaltet. Dies hat sich als bisher geräuschärmste Lösung zur Entlüftung der Bälge 91 erwiesen. Grundsätzlich kann aber die in Fig. 2A beschriebene Darstellung von Schaltzuständen eines Primär- und Sekundärventils für jede Art eines Abschlusses eines Füllvorgangs insbesondere eines Balgfüllvorgangs mit jeweils anderem Startdruckniveau gelten. Ein Balgdruck p_{B} liegt beispielsweise im Bereich von 5 bis 10 bar. Es folgt eine auch dafür repräsentative Erläuterung der Schaltzustände in Bezug auf den Abschluss eines Füllvorgangs für einen Speicher 92.

Beim Erreichen des Speicherenddrucks in der Pneumatikanlage 90 -vorliegend in einem Druckbereich p_{Sp} von etwa 15 bis 20 bar im Speicher- kann die Druckluftversorgungsanlage 10A, 10B wie in Fig. 2A(A) dargestellt entlüftet werden.

Wie in Fig. 2A(A) dargestellt, kann die Druckluftversorgungsanlage 10A, 10B nach Erreichen des Speicherenddrucks p_{Sp}, d.h. beim Erreichen des sogenannten Speicherfüllen-Endes -sei es zeit- oder druckgesteuert- zunächst zum Zeitpunkt t₁ durch Öffnen des Primärventils 41 mit relativ kleiner Nennweite und unter Nutzung der zweiten Drossel 32 entlüftet werden, um den bei Speicherfüllen-Ende erreichten vergleichsweise hohen Innendruck p_{Sp} des Lufttrockners 22 abzubauen. Diese Entlüftung kann -wie aus Fig. 2A(A) ersichtlich- in einem ersten Schritt bis zum Abbau des Drucks auf ein Druckniveau p₁ erfolgen, ab welchem zum Zeitpunkt t₂ ein schnelleres Entlüften mit größerer Nennweite ohne Entlüftungsknall möglich ist. Der erste Entlüftungsschritt kann vorteilhaft bei laufendem Luftverdichter 21 erfolgen. U. a. wird ein Druckniveau p₁ in der Pneumatikanlage 90 aufrechterhalten, was im Hinblick auf eine vorliegend beschriebene Luftfederanlage vorteilhaft ist.

Bei gestopptem Luftverdichter 21 kann zum Zeitpunkt t₂ dann in einem zweiten Schritt der Entlüftung eine Restentlüftung vom Druckniveau p₁ auf einen Restdruck p₀, z.B. Atmosphärendruck, erfolgen. Je nach Bedarf kann dies nur unter Öffnung des Sekundärventils 42 und Nutzung der dritten Drossel 33 oder vorteilhaft unter Öffnung sowohl des Primärventils 41 und des Sekundärventils 42, d.h. unter Hinzuschaltung des Sekundärventils 42 zum Primärventil 41 erfolgen. Der zweite Schritt der Entlüftung - die Restentlüftung - erfolgt also sehr schnell mit vergleichsweise großer Nennweite der gesamten Magnetventilanordnung 40A, 40B mit den Drosseln 32, 33, ohne dass ein Entlüftungsknall auftritt.

Zum weiteren Verständnis der Fig. 2A wird bereits hier auf die Fig. 5 ff bzw. Fig. 8 verwiesen, in der eine Magnetventilanordnung 40.1 bzw. 40.2 mit Primärventil 41 und Sekundärventil 42 gemeinsam in einer Bauform als ein Doppelanker-Magnetventil gebildet ist. Für identische oder ähnliche Teile oder Teile identischer oder ähnlicher Funktion sind zweckmäßig gleiche Bezugszeichen verwendet. Fig. 5 bis Fig. 7 zeigt eine Magnetventilanordnung 40.1, bei der gemäß Fig. 1B ein Primärventil 41 und ein Sekundärventil 42 - stromlos geschlossen - in einer Reihenanordnung angeordnet sind. Fig. 8 zeigt eine Magnetventilanordnung 40.2, bei der gemäß Fig. 1A ein Primärventil 41 und ein Sekundärventil 42 - stromlos geschlossen - in einer Parallelanordnung angeordnet sind. Hier - bereits bezugnehmend auf Fig. 5 bis Fig. 8 - weist das Doppelanker-Magnetventil einen ein erstes Dichtelement 61A des Primärventils 41 tragenden Primäranker 61B und einen ein zweites Dichtelement 62A des Sekundärventils 42 tragenden Sekundäranker 62B auf, die in einem beiden gemeinsamen Spulenkörper 63 einer Spule angeordnet sind. Das Primärventil 41 und das Sekundärventil 42 lässt sich unter Einstellung unterschiedlicher Federkräfte der Ventilfedern 64 über den beiden gemeinsamen Spulenkörper 63 mit einem gemeinsamen Steuerstrom zeitgleich oder sequentiell schalten.

Fig. 2A(B) zeigt einen möglichen Verlauf eines Steuerstroms in Form eines Schaltstroms I_{S} zum Druckverlauf der Fig. 2A(A), wie er beispielsweise zur Ansteuerung der Magnetventilanordnung 40.1 der Fig. 5 bis Fig. 7 oder der Magnetventilanordnung 40.2 der Fig. 8 verwendet werden kann. Bei ansteigendem Schaltstrom I_{S} zieht der Primäranker 61B das Primärventils 41 aufgrund der auf ihn wirkenden Induktionskräfte in Folge des Schwellwertes des ersten Schaltstroms I_{S1} am Zeitpunkt t₁ an und hebt so das erste Dichtelement 61A vom ersten Ventilsitz 61C. Damit öffnet das Primärventil 41 - geht als in den in Fig. 2A(C) angezeigten geöffneten Steuerzustand (1) über.

Bei weiter ansteigendem Schaltstrom I_{S} schaltet auch das Sekundärventil 42 bei Erreichen des Schwellwertes des zweiten Schaltstroms I_{S2} zum Zeitpunkt t₂. D. h. der Sekundäranker 62B wird aufgrund der auf ihn wirkenden Induktionskraft in Folge des zweiten Schaltstroms I_{S2} angezogen, so dass das zweite Dichtelement 62A vom zweiten Ventilsitz 62C abgehoben wird. Damit öffnet auch das Sekundärventil 42 - geht also in den in Fig. 2A(D) gezeigten geöffneten Steuerzustand (1). Dies hat - bei sowohl geöffnetem Primärventil 41 als auch geöffneten Sekundärventil 42 - ein Abfallen des Drucks in der Galerie 95 der Pneumatikanlage 90 als auch in der Druckluftversorgungsanlage 10A, 10B vom ersten Druckniveau p₁ auf einen Restdruck p₀ zur Folge, wie dies in Fig. 2A(A) als durchgezogene Linie gezeigt ist.

Im Unterschied zu bekannten Lösungen wird somit eine schnelle Entlüftung der Druckluftversorgungsanlage 10A, 10B bei Speicherfüllen-Ende erreicht, ohne dass ein Entlüftungsknall auftritt und ohne dass ein zusätzliches Hochdruckentlüftungsventil vorgesehen werden muss. Vielmehr erlaubt die vorliegende "Zwei-Schritt"-Betätigung einer Magnetventilanordnung 40A, 40B mit einem Primärventil 41 und einem Sekundärventil 42 in einer direkt gesteuerten Entlüftungsmagnetventilanordnung eine schnelle Hochdruckentlüftung, wobei zusätzlich bei der vorliegend beschriebenen Ausführungsform gesichert ist, dass bereits getrocknete Luft nicht verloren geht.

Eine Entlüftung der Druckluftversorgungsanlage 10A, 10B im Falle einer Fahrzeugabsenkung im Regelbetrieb kann dagegen auch unter sofortiger Öffnung sowohl des Primärventils 41 als auch des Sekundärventils 42 erfolgen. Die sofortige Öffnung führt praktisch zu einem sehr schnellen Druckabfall vom oben genannten Balgdruck p_{B} in der Druckluftversorgungsanlage 10A, 10B und damit zu einer bestmöglichen Regeneration des Lufttrockners 22. Regelmäßig wird in einem pneumatischen System 100, 100A, 100B, 100C, 100D eine Restdruckhaltefunktion vorgesehen sein, z.B. durch ein Restdruckhalteventil 67 (z. B. der Fig. 1D), was dazu führt, dass ein Restdruck im System 100, 100A, 100B, 100C, 100D oberhalb des Atmosphärendrucks liegt, so dass also eine völlige Entlüftung der Bälge 91 unterbleibt. Vielmehr wird ein Restdruck, welcher oberhalb des Atmosphärendrucks p₀ liegt, in den Bälgen 91 aufrechterhalten - dies vermeidet ein Zusammenfalten der Bälge 91 oder dgl. unvorteilhaftes Aneinanderhaften von Balgwänden.

Im Rahmen des zuvor genannten Entlüftungsvorgangs bestimmt wiederum die im Vergleich zur Nennweitensumme der zweiten und dritten Drossel 32, 33 kleinste Nennweite der ersten Drossel 31 generell die Regenerationsfähigkeit des Lufttrockners 22. Die Druckluft wird in der Druckluftversorgungsleitung in Entlüftungsrichtung über die erste Drossel 31 entspannt und regeneriert beim Durchströmen des Lufttrockners 22 gegen die Belüftungsrichtung das Trocknergranulat. Die quantitative Regenerationsfähigkeit wird letztlich durch das Nennweitenverhältnis der ersten Drossel 31 und der Summe der beiden Nennweiten des Primärventils 41 und des Sekundärventils 42 bzw. der Summe der Nennweiten der zweiten Drossel 32 und der dritten Drossel 33 bestimmt, welche die oben genannte Druckwechselamplitude maßgeblich beeinflussen. Eine verbesserte Regenerationsfähigkeit des Lufttrockners 22 ist somit unter Berücksichtigung einer vorteilhaften Entlüftungssequenz im Regelbetrieb und auch bei Speicherfüllen-Ende gewährleistet. Insbesondere lässt sich die Druckluftversorgungsanlage 10A, 10C mit den beschriebenen Funktionen vorteilhaft nutzen, um auch schnellere Absenkgeschwindigkeiten einer Fahrzeugkarosserie bzw. Verringerung der Bodenfreiheit speziell für die Anwendung bei SUVs erreichen. Dies hat folgenden Hintergrund: Beim Absenken eines Fahrzeugs im Falle einer Höhenregulierung zur Verringerung der Bodenfreiheit kann unter sofortiger Öffnung der gesamten Magnetventilanordnung 40A, 40B mit summarischer Nennweite der Drosseln 32, 33 eine Entlüftung der Druckluftversorgungsanlage 10A, 10B vergleichsweise schnell, regelmäßig im Bereich von wenigen Zehntel-Sekunden erfolgen bevor eines der Magnetventile 93 geöffnet wird. Es hat sich gezeigt, dass die Ausbildung einer Magnetventilanordnung 40A, 40B als eine direkt gesteuerte Entlüftungsmagnetventilanordnung gemäß Fig. 1A, Fig. 1B, d. h. ohne Steuerventil, diese vergleichsweise schnelle Komplettschaltung der Magnetventilanordnung 40A, 40B ermöglicht. Dies ermöglicht die direkt gesteuerte Entlüftungsmagnetventilanordnung insbesondere in Kombination mit den zur kleinen Nennweite der Drossel 31 vergleichsweise großen Nennweitensumme der Drosseln 32 und 33. Die Kombination einer direkt gesteuerten Entlüftungsmagnetventilanordnung mit dem genannten Konzept der Drosseln 31, 32, 33 ermöglicht ein vorteilhaftes Absenken des Fahrzeugs, wobei zum einen eine übermäßige Geräuschentwicklung vermieden ist und darüber hinaus werden Störeinflüsse oder gegenläufige Einflüsse betreffend eine Regeneration des Trockners 22 vermieden.

Die aus Fig. 2A(B) ersichtliche abfallende Rampe des Steuerstroms I_{S} führen dazu, dass das Primärventil 41 und das Sekundärventil 42 zu den in Fig. 2A(C) und Fig. 2A(D) gezeigten Zeitpunkten t₃, t₄ wieder in den geschlossenen Steuerzustand (0) übergehen.

Während die Erläuterung der Fig. 2A(A) bis Fig. 2A(D) insbesondere für eine von Druckluftversorgungsanlage 10A mit einer Magnetventilanordnung 40A erfolgt, bei welcher das Primärventil 41 und das Sekundärventil 42 als Parallelschaltung angeordnet sind, so können dennoch die grundsätzlichen Effekte auch mit einer Druckluftversorgungsanlage 10B erreicht werden, bei welcher die Magnetventilanordnung 40B mit einem Primärventil 41 und Sekundärventil 42 in Reihenschaltung ausgeführt ist, auch wenn ein quantitatives Ergebnis bei einer Reihenschaltung anders sein wird als bei einer Parallelschaltung. Grundsätzlich ergibt sich jedoch in Bezug auf Fig. 2A auch bei einer Reihenschaltung von Primärventil 41 und Sekundärventil 42 zunächst bei alleinigem Öffnen des Primärventils 41 ein Druckabfall von p_{Sp} auf ein Druckniveau p₁ für den Fall einer Speicherfüllen-Ende-Funktion. Der Druckabfall von p_{Sp} auf p₁ erfolgt jedoch bei einer Reihenschaltung (im Unterschied zu einer Parallelschaltung) nicht bei einer vollständig geöffneten Entlüftungsleitung 30. Vielmehr wird durch Öffnen des Primärventils 41 ein zusätzliches Volumen für die Druckluft und ein Auslass über die zweite Drossel 32 in den separaten Leitungsabschnitt 47' zur Verfügung gestellt. Dies führt zu einem anderen Druckabfall als bei einer Parallelschaltung. Dennoch kann dieser Druckabfall auf ein Druckniveau p₁ unterhalb eines Drucks p_{Sp} dazu genutzt werden, einen Entlüftungsknall bei Entlüftung nach Speicherfüllen-Ende zu vermeiden.

Die übrigen Funktionszustände, insbesondere bei sofortigem Öffnen sowohl des Primärventils 41 und des Sekundärventils 42, gelten auch für den Fall einer Druckluftversorgungsanlage 10B mit in einer Reihenschaltung angeordnetem Primärventil 41 und Sekundärventil 42 einer Magnetventilanordnung 40B. Insgesamt wird in allen Fällen einer Magnetventilanordnung 40A - 40D einer Druckluftversorgungsanlage 10A - 10D mit Vorteil versehen erreicht, dass eine vergleichsweise schnelle Entlüftung der Druckluftversorgungsanlage 10A - 10D unter zunächst erfolgendem geräuscharmen Abbau von Druckspitzen und dennoch eine ausreichende Trocknerregeneration möglich ist. Insbesondere bei der Funktionsstellung Speicherfüllen-Ende ist auch die Vermeidung eines Entlüftungsknalls sowie insgesamt eine verbesserte Akustik der Druckluftversorgungsanlage 10A - 10D sichergestellt.

Diese Vorteile ergeben sich insbesondere bei der vorliegend beschriebenen Ausführungsform einer Druckluftversorgungsanlage 10A - 10D mit einer direkten Schaltung eines Druckluftvolumens lediglich über das Primärventil 41 und Sekundärventil 42. Eine solche direkt gesteuerte Magnetventilanordnung 40A - 40D kommt besonders vorteilhaft ohne ein zusätzliches Steuerventil aus. Dennoch kann in einer hier nicht gezeigten Ausführungsform auch eine Magnetventilanordnung zur indirekten Schaltung eines Druckluftvolumens unter Verwendung von einem oder mehreren Steuerventilen genutzt werden, um das grundsätzliche, nicht auf die vorliegend beschriebene Ausführungsform beschränkte erfinderische Konzept zu realisieren.

Die vorgenannten Ausführungen gelten in analoger Weise - leicht abgewandelt - auch für eine Magnetventilanordnung 40C, 40D einer Druckluftversorgungsanlage 10C, 10D, bei welcher das Primärventil 41 und das Sekundärventil 42 stromlos offen ausgebildet sind. Bezugnehmend auf Fig. 2B(A) lässt sich ein praktisch gleicher Druckabfall am Beispiel des Speicherfüllen-Ende realisieren für einen in Fig. 2B(B) dargestellten Haltestrom für die stromlos offenen Magnetventilanordnungen 40C, 40D. Allerdings ist - soweit nicht eine Restdruckhaltefunktion des Restdruckhalteventils 67 greift - aufgrund der stromlos offenen Magnetventilanordnungen 40C, 40D ein Druckabfall regelmäßig auf p₀= p_{At-mosphäre} zu erwarten. Insofern ist der Druck für große Zeiten t in Fig. 2B(A) im Wesentlichen p₀ und nicht wie in Fig. 2A(A) leicht größer als p₀.

Zum Halten des Drucks p_{Sp} in der in Fig. 2B(A) dargestellten Weise wird während des Betriebs des Luftverdichters 21 ein Haltestrom I_{H} derart groß oberhalb eines Haltestroms I_{H2} für einen Sekundäranker eines Sekundärventils 42 gewählt, dass dadurch eine definierte Druckbegrenzung erreicht wird, um zu vermeiden, dass der Speicherdruck p_{Sp} einen Anker des Primärventils 41 oder Sekundärventils 42 aufdrückt. Anders ausgedrückt ist der Haltestrom I_{H} so groß, dass er in der Lage ist über die Induktionskräfte die Anker des Primär- und Sekundärventils 41, 42 auf einen zugeordneten Ventilsitz zu halten - damit ist die Magnetventilanordnung 40C, 40D bei Bestromung mit einem Haltestrom I_{H} geschlossen.

Für den folgenden Druckverlauf der Fig. 2B(A) sowie die in Fig. 2B(C) und Fig. 2B(D) dargestellten pneumatischen Steuerzustände eines Sekundärankers des Sekundärventils 42 bzw. eines Primärankers eines Primärventils 41 der stromlos offenen Magnetventilanordnung 40C, 40D werden bevorzugt Magnete mit geringer Hysterese verwendet; d. h. ein Primäranker des Primärventils 41 zieht bei einem relativ niedrigen Strom I_{H1} an und fällt auch bei diesem relativ niedrigen Strom I_{H1} ab, wo hingegen der Sekundäranker des Sekundärventils 42 bei vergleichsweise hohem Haltestrom I_{H2} anzieht bzw. abfällt. Eine Auslegung der entsprechenden Stromrampen kann je nach Bedarf erfolgen.

Fällt also der Haltestrom I_{H} auf einen Haltestrom I_{H2} für das Sekundärventil 42, fällt der Sekundäranker des Sekundärventils 42 ab, was einen Druckabfall von p_{Sp} auf p₁ zur Folge hat. Bei weiter abfallenden Haltestrom I_{H} auf I_{H1} erfolgt nach kurzer Zeit dann ein vergleichsweise schneller Druckabfall, nach dem auch der Primäranker des Primärventils 41 abfällt. Fig. 2B(C) und Fig. 2B(D) zeigen dazu die nach kurzer Zeit aufeinander folgenden pneumatischen Steuerzustände (1) für einen Anker des dann wieder im Wesentlichen stromlos offenen Sekundärventil 42 bzw. Primärventil 41.

Die oben ausgeführten Vorteile gelten auch für eine Magnetventilanordnung 40C, mit der entsprechenden Abwandlung für die Reihenschaltung von Primärventil 41 und Sekundärventil 42 der Magnetventilanordnung 40D. Auch eine schnelle Entlüftung der Druckluftversorgungsanlage 10C, 10D im Falle einer Fahrzeugabsenkung im Regelbetrieb kann unter sofortiger Öffnung sowohl des Primärventils 41 als auch des Sekundärventils 42 erfolgen, in dem ein Haltestrom I_{H} vergleichsweise schnell unterhalb des Haltestroms I_{H1} gesenkt wird.

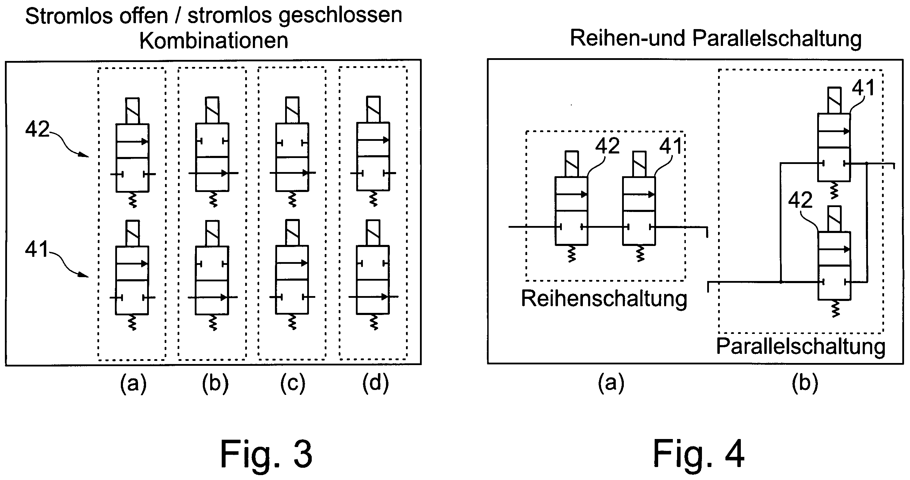

Fig. 3 zeigt eine Auswahl von stromlos offen/stromlos geschlossen-Kombinationen, die für das Primärventil 41 und das Sekundärventil 42 der Magnetventilanordnung 40A, 40B, 40C, 40D bei der Ausführungsform der Druckluftversorgungsanlage 10A, 10B, 10C, 10D der Fig. 1 möglich sind. Die als (a) bezeichnete stromlos geschlossene Variante sowohl für das Primärventil 41 als auch für das Sekundärventil 42 ist bei der Druckluftversorgungsanlage 10A, 10B der Fig. 1 gezeigt. Die mit (b) gezeigte Variante ist in Abwandlung in der Ausführungsform der Druckluftversorgungsanlage 10C, 10D der Fig. 1 gezeigt. Entsprechend lassen sich auch die Varianten (c), (d) durch Abwandlung der Ausführungsformen der Fig. 1 realisieren. Eine entsprechende Anpassung der Steuerströme I_{S} und Schaltströme der Fig. 2 ist möglich. So lässt sich beispielsweise die Variante (b) realisieren, bei der sowohl das Primärventil 41 als auch das Sekundärventil 42 stromlos offen sind, und die bei der Druckluftversorgungsanlage 10C, 10D der Fig. 1C, Fig. 1D gezeigt sind. Die weiteren Varianten (c) und (d) sehen vor, dass das Primärventil 41 und das Sekundärventil 42 stromlos unterschiedlich geschaltet sind. Nämlich so, dass eines von beiden stromlos offen und das andere stromlos geschlossen ist. Bei den Varianten (b), (c) und (d) hat es sich darüber hinaus als vorteilhaft erwiesen, wenigstens in dem mit einem stromlos offenen Ventil versehenen ersten oder zweiten Zweig 48, 47 der Entlüftungsleitung und/oder -insbesondere bei Variante (b) der Fig. 3 bzw. Fig. 1D- direkt in dem Abschnitt der Entlüftungsleitung 30 zwischen Anschluss 46 und Entlüftung 3, ein Restdruckhalteventil 67 vorzusehen. Das als Rückschlagventil ausgebildete Restdruckhalteventil 67 der Fig. 1D hat den Vorteil, dass zum einen ein Fremdkörpereintrag in die ansonsten offene Entlüftungsleitung 30 zuverlässig verhindert wird, soweit dies nicht bereits durch den Filter 3.1 gewährleistet werden kann. Dies hat sich auch zur Realisierung der oben genannten Restdruckhaltefunktion als vorteilhaft erwiesen, die es ermöglicht, einen gewissen Restdruck in der Druckluftversorgungsanlage 10A, 10B, 10C, 10D und/oder in der Pneumatikanlage 90 aufrechtzuerhalten. Bei einer vorliegenden Luftfederanlage hat sich ein Restdruck zwischen 0,5 und 1,5 bar als vorteilhaft erwiesen, um ein unerwünschtes Zusammenfalten der Bälge zu vermeiden.

Fig. 4 zeigt - für stromlos-geschlossene Kombinationen des Primärventils 41 und Sekundärventils 42 (Variante (a) der Fig. 3 bzw. Fig. 1A, Fig. 1B) - zwei Möglichkeiten zur Abwandlung der Ausführungsform einer Druckluftversorgungsanlage. So kann gemäß Variante (b) der Fig. 4 eine Parallelschaltung von Primärventil 41 und Sekundärventil 42 vorgesehen sein (wie in Fig. 1A). Gemäß Variante (a) der Fig. 4 kann auch eine Reihenschaltung von Primärventil 41 und Sekundärventil 42 (wie in Fig. 1B) vorgesehen sein. Stromlos-offene Kombinationen des Primärventils 41 und des Sekundärventils 42 sind in Fig. 1C und Fig. 1D gezeigt. Die Varianten der Fig. 4 (a), (b) und Fig. 3 (a) bis (d) sind auch im Übrigen untereinander beliebig kombinierbar ohne vom Konzept der Erfindung abzuweichen.

Fig. 5 zeigt eine konstruktiv realisierte bevorzugte Ausführungsform einer Druckluftversorgungsanlage 10. Diese ist als Einrichtung mit einer Gehäuseanordnung 50 realisiert, die eine Anzahl von Gehäusebereichen aufweist. In dem ersten Bereich 51 ist ein Antrieb in Form eines teilweise gezeigten Motors M und in dem zweiten Bereich 52 der vom Motor M antreibbare Luftverdichter 21 angeordnet. Der Luftverdichter 21 weist dazu einen im Verdichtungsraum 54 hin und her bewegbaren Kolben 55 auf, der über eine Welle und Pleuel 56 vom Motor M angetrieben wird. Dem Verdichtungsraum 54 wird Luft über eine Luftzuführungs-Schnittstelle E0 der oben genannten Luftzuführung 0 zugeführt. Am Ausgang des Verdichtungsraums 54 befindliche Druckluft wird über ein Auslassventil 57 oder dergleichen einer Druckquellen-Schnittstelle E1 für die oben genannte Druckluftzuführung 1 übergeben. Die Druckluft wird in einen dritten Bereich 53 der Druckluftversorgungsanlage 10 abgegeben. Der dritte Bereich 53 enthält den Lufttrockner 22 mit Trockenbehälter 58 und eine Magnetventilanordnung 40 als Reihenanordnung von Primärventil 41 und Sekundärventil 42. Den Gehäusebereichen sind entsprechende erste, zweite, dritte Gehäuseteile A, B, C zugeordnet, die gegebenenfalls über eine oder mehrere Dichtungen D gegeneinander abgedichtet sind. Dem dritten Bereich 53 ist insbesondere ein drittes Gehäuseteil C und ein das dritte Gehäuseteil C bodenseitig abschließender Deckel T zugeordnet. Der Deckel T bildet eine Druckluftversorgungs-Schnittstelle E2 für die oben genannte Druckluftzuführung 2 aus. Die erste Drossel 31 ist vorliegend mit definierter Nennweite als Öffnung zum Trockenbehälter 58 im Deckel T gebildet. Der Deckel T bildet auch eine Entlüftungs-Schnittstelle E3 für die oben genannte Entlüftung 3 aus. Der Deckel T bildet auch eine elektrische Steuer-Schnittstelle S zur Anbindung der oben genannten Steuerleitung 65 an die Magnetventilanordnung 40.1 aus. Der Deckel T ist in seinen Abmaßen weitgehend kongruent mit einer Bodenkontur des Trockenbehälters 58 und kann praktisch passgenau auf den Trockenbehälter 58 aufgesetzt werden.

Das dritte Gehäuseteil C ist durch eine Wandung W des mit Trockengranulat gefüllten Trockenbehälters 58 und dem Deckel T gebildet. Das Trockengranulat wird durch eine Feder F im Trockenbehälter 58 unter Druck gehalten. Die Wandung W des Trockenbehälters 58 wiederum bildet bodenseitig eine symmetrisch zu einer weitgehend mittigen Achse Y des Trockenbehälters 58 angeordnete Einbuchtung G. In der Einbuchtung G ist die Entlüftungsventilanordnung in Form der Magnetventilanordnung 40.1 symmetrisch, d.h. vorliegend parallel und mittig zur Achse Y des Trockenbehälters 58 untergebracht. Der Deckel T schließt die Einbuchtung G zusammen mit der darin befindlichen Magnetventilanordnung 40.1 in der genannten Weise dicht ab.

Durch die so U-förmige Anordnung des ersten, zweiten und dritten Bereichs 51, 52, 53 und den zugeordneten ersten, zweiten und dritten Gehäuseteile A, B, C wird eine bauraumsparende Druckluftversorgungsanlage 10 zur Verfügung gestellt, welche zudem horizontale Schnittstellen - nämlich als S, E0, E1, E2, E3 - ermöglicht. Grundsätzlich kann diese Aufteilung auch durch Anordnung des ersten bis dritten Bereichs in einer anderen als U-förmigen Anordnung, z.B. einer Z-förmigen Anordnung realisiert werden.
Außerdem wird eine Gewichtseinsparung dadurch erreicht, dass die Außenkontur des Trockenbehälters 58 des Lufttrockners 22 und der Deckel T als Teile der Gehäuseanordnung 50 genutzt werden.

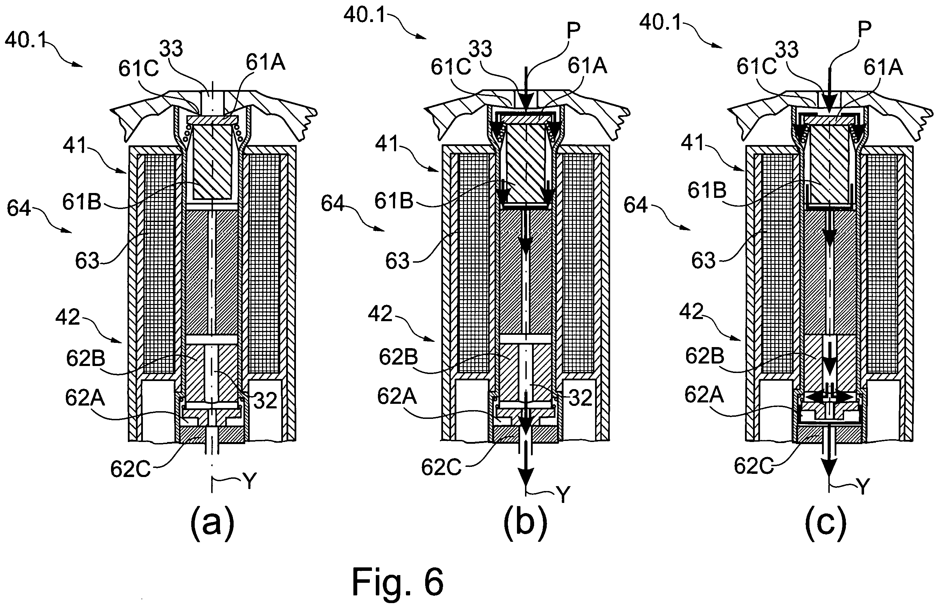

Des Weiteren ist das Detail X der Fig. 5 in Fig. 5B, und in Fig. 5A abgewandelt, als Magnetventilanordnung 40.1 vergrößert dargestellt, bei der vorliegend das Primärventil 41 und das Sekundärventil 42 in einem Doppelanker-Magnetventil als Reihenanordnung gebildet ist. Das in seiner Funktion aus Fig. 6 weiter ersichtliche Doppelanker-Magnetventil der Fig. 5A, Fig. 5B hat einen ein erstes Dichtelement 61A des Primärventils 41 tragenden Primäranker 61B und einen ein zweites Dichtelement 62A des Sekundärventils 42 tragenden Sekundäranker 62B, wobei die Anker als Kern einer Spule innerhalb der im Spulenkörper 63 vergossenen Wicklung 68 der Spule angeordnet sind. Der Primäranker 61B und Sekundäranker 62B sind auf einer Achse Y des Doppelanker-Magnetventils in dem mit Druckluft durchströmbaren Ankerführungsrohr 69 angeordnet. Das erste bzw. zweite Dichtelement 61A, 62A ist jeweils einem ersten bzw. zweiten Ventilsitz 61C, 62C zugeordnet, wobei sich der erste Ventilsitz 61C und der zweite Ventilsitz 62C eingangs und ausgangs des in einem Eisenkreisjoch gefassten Spulenkörpers 63 gegenüberliegen.

Im Vergleich zu Fig. 5B ist in Fig. 5A die zweite Drossel 32 als ein zusätzlicher so bezeichneter Hochdruckentlüftungskanal neben dem zweiten Ventilsitz 62C erkennbar. Bei der der Einfachheit halber gleich bezeichneten Magnetventilanordnung 40.1 der Fig. 5B ist die Drossel 32 als so bezeichnete Nennweite des mittigen, auf der Achse Y verlaufenden Drosselkanals im Sekundäranker 62B gebildet. Dieser Drosselkanal durchsetzt auch das zweite Dichtelement 62A. Letzterer Teil im Dichteelement 62A entfällt bei Fig. 5A aufgrund des die zweite Drossel 32 bildenden Hochdruckentlüftungskanals.

In Fig. 5A und Fig. 5B sind die zur Bildung der Nennweiten der zweiten Drossel 32 und dritten Drossel 33 geeigneten Öffnungen in der Magnetventilanordnung 40.1 angegeben. Vorliegend ist die Nennweite der zweiten Drossel 32 durch eine Nennweite eines Drosselkanals auf der Achse Y im Sekundäranker 62B des Sekundärventils 42 gebildet, d.h. wie in Fig. 5B gezeigt. Die Nennweite der dritten Drossel 33 ist als Nennweite eines ersten Ventilsitzes 61C beim Primärventil 41 gebildet. Die die Druckluftführung erläuternde Darstellung der Fig. 5 zeigt den Lufttrockner 22 und die vorliegend dreiseitig in der Einbuchtung G des Trockenbehälters 58 umfasste Magnetventilanordnung 40.1 im Detail. Daraus ist ersichtlich, dass die Einbuchtung G frei von Trockenmittel ist. Eine mit durchgehenden Pfeilen dargestellte Entlüftungsströmung P aus der Galerie 95 kann nach Bedarf über die Druckluftversorgungsschnittstelle E2 und die Entlüftungsschnittstelle E3 im Deckel T erfolgen. Der Lufttrockner 22 ist gemäß der symbolisch dargestellten Entlüftungsströmung P entgegengesetzt zu einer Versorgungsströmung *P̅* zur Regeneration durchströmbar. Die mit gestrichelten Pfeilen dargestellte Versorgungsströmung *P̅* zur Versorgung der Pneumatikanlage 90 über die Galerie 95 erfolgt über die Druckquellen-Schnittstelle E1 und die Druckluftversorgungsschnittstelle E2.

In der in Ansicht (a) der Fig. 6 dargestellten beidseitig stromlos geschlossenen Stellung des in Fig. 5 und Fig. 5B gezeigten Doppelanker-Magnetventils sitzen das erste bzw. zweite Dichtelement 61A, 62A jeweils auf dem ersten bzw. zweiten Ventilsitz 61C, 62C. Die Magnetventilanordnung 40.1 ist in dieser Stellung vollständig geschlossen, d.h. Primärventil 41 und Sekundärventil 42 sind pneumatisch dicht geschlossen.

In der in Ansicht (b) der Fig. 6 gezeigten Stellung ist jedenfalls das Primärventil 41 geöffnet, d.h. der Primäranker 61B ist bei Bestromung des Spulenkörpers 63 zur Achsmitte der Spule hin gezogen und hebt so das erste Dichtelement 61A vom ersten Ventilsitz 61C ab. Eine Entlüftungsströmung P kann in der mit Pfeilen gezeigten Weise über einen auf der Achse Y des Doppelanker-Magnetventils geführten Kanal und Drosselkanal, d.h. durch die Drossel 32 zur Entlüftungsschnittstelle E3 geführt werden. Die Stellung der Ansicht (b) der Fig. 6 eignet sich für die erste Stufe einer Entlüftung wie sie beim Entlüften bei Speicherfüllen-Ende anhand der Fig. 2A - Fig. 2D beschrieben wurde.

Ansicht (c) der Fig. 6 zeigt eine weitere Stellung der Magnetventilanordnung 40.1 mit geöffnetem Primärventil 41 und geöffnetem Sekundärventil 42 - Primär- und Sekundäranker 61B, 62B sind zur Achsmitte der Spule hin gezogen, so dass die ersten und zweiten Dichtelemente 61A, 62A vom ersten und zweiten Ventilsitz 61C, 62C abgehoben sind. Die Entlüftungsströmung P über die vergleichsweise weite Nennweite der Drossel 33 kann, wie durch die Pfeile gekennzeichnet, beispielsweise im Falle eines Fahrzeugabsenkens im Regelbetrieb oder im Falle einer zweiten Entlüftungsstufe, wie anhand von Fig. 1A - Fig. 1D beschrieben, geführt werden.

Grundsätzlich eignet sich zur Realisierung des Ventilsitzes 61C, 62C ein Elastomersitz oder auch ein metallischer Anschlag je nach Bedarf und Leckageanforderung. Vorliegend ist für einen Elastomersitz auch das erste und/oder zweite Dichtelement 61A, 62A aus einem Elastomer gebildet.

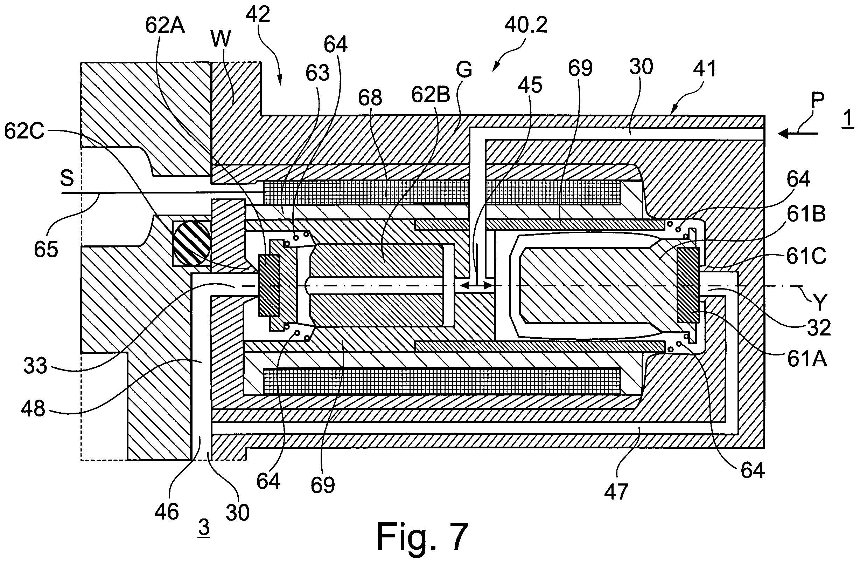

Fig. 7 zeigt -in einer zur Fig. 5 alternativen konstruktiven Realisierung- eine Magnetventilanordnung 40.2, bei welcher das Primärventil 41 und das Sekundärventil 42 in einer Parallelschaltung, vorliegend dem Prinzip der Fig. 1A folgend, miteinander verbunden sind. Der Einfachheit halber sind dazu für identisehe oder ähnliche Teile oder Teile identischer oder ähnlicher Funktion gleiche Bezugszeichen, wie bereits bei Fig. 5, Fig. 5A, Fig. 5B und Fig. 6 benutzt worden, so dass hinsichtlich des grundsätzlichen Aufbaus und der verwendeten Teile für die ebenfalls als Doppelanker-Magnetventil realisierte Magnetventilanordnung 40.2 auf die Beschreibung der Fig. 5 bis Fig. 6 grundsätzlich verwiesen werden kann. Das Doppelanker-Magnetventil der Magnetventilanordnung 40.2 ist vorliegend in einem sowohl für das Primärventil 41 als auch das Sekundärventil 42 geltenden stromlos geschlossenen Zustand gezeigt. Mit anderen Worten befindet sich die in Fig. 7 gezeigte Magnetventilanordnung 40.2 in einem beidseitig stromlos geschlossenen Zustand, wie er in Fig. 1A gezeigt ist. Dieser Zustand ist analog des beidseitig geschlossenen Zustands, wie er in Fig. 6A für die Magnetventilanordnung 40.1 entsprechend der Fig. 1B gezeigt ist.

Ein wesentlicher Unterschied zwischen den Magnetventilanordnungen 40.2 und 40.1 ist die im Folgenden beschriebene Kanalführung für Druckluft in der Magnetventilanordnung 40.2 - also im Bereich der Entlüftungsleitung 30 der Fig. 1A im Unterschied zur Entlüftungsleitung 30 der Fig. 1B. Im Einzelnen ist in Fig. 7 analog zu Fig. 1A ein eingangsseitiger, d. h. druckluftanschlussseitiger pneumatischer Anschluss 45 und ein ausgangsseitiger, d. h. entlüftungsseitiger pneumatischer Anschluss 46 erkennbar. Ebenso ist ein druckluftanschlussseitiger in Bezug auf Fig. 1A bereits erläuterter Leitungsabschnitt der Entlüftungsleitung 30 sowie ein entlüftungsseitiger bereits in Fig. 1A erläuterter Leitungsabschnitt der Entlüftungsleitung 30 erkennbar. Zwischen den Anschlüssen 45, 46 ist das Primärventil 41 in einer ersten Zweigleitung 47 und das Sekundärventil 42 in einer zweiten Zweigleitung 48 pneumatisch angeschlossen. Des Weiteren ist in Fig. 7 die Nennweite einer zweiten Drossel 32 zwischen Anschluss 45 und Primärventil 41 als ausgangsseitiger, ggf. auch eingangsseitiger Öffnungsquerschnitt eines Einlasses zu einem Führungsraum für den Primäranker 61B erkennbar. Außerdem ist die Nennweite einer dritten Drossel 33 als Öffnungsweite des zweiten Ventilsitzes 62C des Sekundärventils 42, ggf. auch der Nennweite eines mittigen Drosselkanals auf der Achse Y im Sekundäranker, erkennbar. Eine Entlüftungsströmung P ist in Fig. 7 durch Pfeile in der Entlüftungsleitung 30 dargestellt. Wie bereits anhand von Fig. 1A erläutert, kann so die Entlüftungsströmung P wahlweise über das Primärventil 41 mit zugeordneter Nennweite der zweiten Drossel 32 und/oder über das Sekundärventil 42 mit zugeordneter Nennweite der dritten Drossel 33 von einer Druckluftzuführung zu einem Entlüftungsanschluss geführt werden. Die Vorteile, wie sie grundsätzlich anhand von Fig. 2 erläuterten Betriebsweise dargestellt sind, gelten auch für die in Fig. 7 gezeigte Magnetventilanordnung 40.2.

### BEZUGSZEICHENLISTE (Bestandteil der Beschreibung)

- 0: Luftzuführung
- 0.1: Filter
- 1: Druckluftzuführung
- 2: Druckluftanschluss
- 3: Entlüftungsanschluss
- 3.1: Filter
- 10; 10A, 10B, 10C, 10D: Druckluftversorgungsanlage
- 20: Druckluftversorgungsleitung
- 21: Luftverdichter
- 22: Lufttrockner
- 30: Entlüftungsleitung
- 31: erste Drossel
- 32, 32': zweite Drossel
- 33: dritte Drossel
- 40.1, 40.2, 40A, 40B, 40C, 40D: Magnetventilanordnung
- 41: Primärventil
- 42: Sekundärventil
- 43: Magnetteil
- 44: Pneumatikteil
- 45: eingangsseitiger bzw. druckluftanschlussseitiger pneumatischer Anschluss
- 46: ausgangsseitiger bzw. entlüftungsseitiger pneumatischer Anschluss
- 47: erste Zweigleitung
- 47': separater Leitungsabschnitt, Bypass zur Entlüftungsleitung 30
- 48: zweite Zweigleitung
- 48': Leitungsabschnitt der Entlüftungsleitung 30
- 49: Steuermittel
- 50: Gehäuseanordnung
- 51: erster Bereich
- 52: zweiter Bereich
- 53: dritter Bereich
- 54: Verdichtungsraum
- 55: Kolben
- 56: Welle und Pleuel
- 57: Auslassventil
- 58: Trockenbehälter
- 61A: erstes Dichtelement
- 61B: Primäranker
- 61C: erster Ventilsitz
- 62A: zweites Dichtelement
- 62B: Sekundäranker
- 62C: zweiter Ventilsitz
- 63: Spulenkörper
- 64: Ventilfeder
- 65: Steuerleitung
- 66: Druckbegrenzer
- 67: Restdruckhalteventil
- 68: Wicklung
- 69: Ankerführungsrohr
- 90: Pneumatikanlage
- 91: Balg
- 92: Speicher
- 93: Magnetventil, Niveauregelventil für Balg
- 94: Magnetventil, Niveauregelventil für Speicher
- 95: Galerie
- 96: Ventilblock
- 100, 100A, 100B, 100C, 100D: pneumatisches System
- A: erster Gehäuseteil
- B: zweiter Gehäuseteil
- C: dritter Gehäuseteil
- D: Dichtung
- T: Deckel
- E0: Luftzuführungs-Schnittstelle, Schnittstelle
- E1: Druckquellen-Schnittstelle, Schnittstelle
- E2: Druckluftversorgungs-Schnittstelle, Schnittstelle
- E3: Entlüftungs-Schnittstelle, Schnittstelle
- S: Steuer-Schnittstelle, Schnittstelle
- F: Feder
- G: Einbuchtung
- M: Motor
- P: Entlüftungsströmung
- *P̅*: Versorgungsströmung
- p_{Sp}: Speicherenddruck
- p_{B}: Balgdruck
- p₁, p₀: Druckniveau / Restdruck
- I_{S}, I_{S1}, I_{S2}: Schaltstrom
- I_{H}, I_{H1}, I_{H2},: Haltestrom
- W: Wandung
- X: Detail
- Y: Achse Lufttrockner und Doppelanker-Magnetventil

## Patentansprüche

1. Druckluftversorgungsanlage (10, 10A, 10B, 10C, 10D) zum Betreiben einer Pneumatikanlage (90), insbesondere einer Luftfederanlage eines Fahrzeugs, aufweisend:
- eine Luftzuführung (0) und einen Luftverdichter (21) zur Versorgung einer Druckluftzuführung (1) mit Druckluft,
- eine Entlüftungsleitung (30) mit einer Entlüftungsventilanordnung in Form einer steuerbaren Magnetventilanordnung (40.1, 40.2, 40A, 40B, 40C, 40D) und einem Entlüftungsanschluss (3) zum Ablassen von Luft, und
- eine Druckluftversorgungsleitung (20) mit einem Lufttrockner (22) und einem Druckluftanschluss (2) zur Versorgung der Pneumatikanlage (90) mit Druckluft, **dadurch gekennzeichnet, dass**
- die Magnetventilanordnung (40.1, 40.2, 40A, 40B, 40C, 40D) ein Primärventil (41) und ein Sekundärventil (42) aufweist, wobei
- das Primärventil (41) und das Sekundärventil (42) mit einem gemeinsamen auf beide wirkenden Steuermittel (49) der Magnetventilanordnung (40.1, 40.2, 40A, 40B, 40C, 40D) aktivierbar ist.

2. Druckluftversorgungsanlage (10, 10A, 10B, 10C, 10D) nach Anspruch 1, **dadurch gekennzeichnet, dass** ein pneumatischer entlüftungsseitiger Anschluss (46) und ein pneumatischer druckluftanschlussseitiger Anschluss (45) der Magnetventilanordnung (40.1, 40.2, 40A, 40B,40C, 40D) in der Entlüftungsleitung (30) angeordnet ist.

3. Druckluftversorgungsanlage (10, 10A, 10B, 10C, 10D) nach Anspruch 1 oder 2,
**dadurch gekennzeichnet, dass** das Primärventil (41) und Sekundärventil (42) in einer Parallelschaltung angeordnet sind, wobei das Primärventil (41) in einer ersten Zweigleitung (47) und das Sekundärventil (42) in einer zweiten Zweigleitung (48) der Parallelschaltung angeordnet ist, wobei die erste und zweite Zweigleitung (47, 48) an gemeinsamen Anschlüssen (45, 46) einer einzigen Leitung, insbesondere der Entlüftungsleitung (30), anschließen.

4. Druckluftversorgungsanlage (10A, 10C) nach Anspruch 1 oder 2, **dadurch gekennzeichnet, dass** das Primärventil (41) und Sekundärventil (42) in einer Reihenschaltung angeordnet sind, wobei das Primärventil (41) und das Sekundärventil (42) in einem gemeinsamen einzigen Leitungsabschnitt zwischen einem entlüftungsseitigen und druckluftanschlussseitigen Anschluss (45, 46), insbesondere der Entlüftungsleitung (30), angeordnet sind.

5. Druckluftversorgungsanlage (10, 10A, 10B, 10C, 10D) nach einem der Ansprüche 1 bis 4, **dadurch gekennzeichnet, dass** das Primärventil (41) und/oder das Sekundärventil (42) einen Druckbegrenzer (66) aufweist.

6. Druckluftversorgungsanlage (10, 10A, 10B, 10C, 10D) nach einem der Ansprüche 1 bis 5,
**dadurch gekennzeichnet, dass** die Entlüftungsleitung (30) ein Restdruckhalteventil (67) aufweist.

7. Druckluftversorgungsanlage (10, 10A, 10B, 10C, 10D) nach einem der Ansprüche 1 bis 6,
**dadurch gekennzeichnet, dass** die Magnetventilanordnung (40.1, 40.2, 40A, 40B, 40C, 40D), zur direkten Schaltung eines Druckluftvolumens nur das Primär- und Sekundärventil (41, 42) als einzige Ventile aufweist.

8. Druckluftversorgungsanlage (10, 10A, 10B, 10C, 10D) nach einem der Ansprüche 1 bis 7,
**dadurch gekennzeichnet, dass** zwischen dem Druckluftanschluss (2) und dem Lufttrockner (22) eine erste Drossel (31) angeordnet ist und in der Entlüftungsleitung (30) dem Primärventil (41) eine zweite Drossel (32) und/oder dem Sekundärventil (42) eine dritte Drossel (33) vorgeordnet ist.

9. Druckluftversorgungsanlage (10, 10A, 10B, 10C, 10D) nach einem der Ansprüche 1 bis 8,
**dadurch gekennzeichnet, dass**, die Nennweitensumme der Nennweiten der zweiten und dritten Drossel (32, 33) größer als eine, insbesondere doppelte, Nennweite einer ersten Drossel (31) ist.

10. Druckluftversorgungsanlage (10, 10A, 10B, 10C, 10D) nach einem der Ansprüche 1 bis 9,
**dadurch gekennzeichnet, dass** das gemeinsame auf das Primärventil (41) und das Sekundärventil (42) wirkende Steuermittel (49) einen Magnetteil (43) der Magnetventilanordnung umfasst, insbesondere einen auf beide wirkenden gemeinsamen Spulenkörper (63) und/oder eine gemeinsame Steuerleitung (65) oder eine gemeinsame Steuerung aufweist.

11. Druckluftversorgungsanlage (10, 10A, 10B, 10C, 10D) nach Anspruch 10,
**dadurch gekennzeichnet, dass** die Magnetventilanordnung (40.1, 40.2, 40A, 40B, 40C, 40D) als ein Doppelanker-Magnetventil gebildet ist, das einen ein erstes Dichtelement (61A) des Primärventils (41) tragenden Primäranker (61B) und einen ein zweites Dichtelement (62A) des Sekundärventils (42) tragenden Sekundäranker (62B) aufweist, die in einem gemeinsamen Spulenkörper (63) angeordnet sind, insbesondere von einem gemeinsamen Spulenkörper (63) umgeben sind.

12. Druckluftversorgungsanlage (10, 10A, 10B, 10C, 10D) einem der Ansprüche 1 bis 11,
**dadurch gekennzeichnet, dass** ein Trockenbehälter (58) des Lufttrockners (22) eine Wandung (W) aufweist, die eine trockenmittelfreie Einbuchtung (G) bildet, wobei die Magnetventilanordnung (40.1, 40.2, 40A, 40B, 40C, 40D) wenigstens teilweise in der Einbuchtung (G) angeordnet ist.

13. Pneumatisches System (100, 100A, 100B, 100C, 100D) mit der Druckluftversorgungsanlage (10, 10A, 10B, 10C, 10D) nach einem der Ansprüche 1 bis 12 und mit einer Pneumatikanlage (90) in Form einer Luftfederanlage.

14. Verfahren zum Betreiben einer Pneumatikanlage (90), insbesondere einer Luftfederanlage eines Fahrzeugs, mittels einer Druckluftversorgungsanlage (10, 10A, 10B, 10C, 10D) nach einem der Ansprüche 1 bis 12, aufweisend die Schritte:
- Versorgen einer Druckluftzuführung (1) mit Druckluft mittels einer Luftzuführung (0) und einem Luftverdichter (21),
- Ablassen von Luft über eine Entlüftungsleitung (30) mittels einer Entlüftungsventilanordnung in Form einer steuerbaren Magnetventilanordnung (40.1, 40.2, 40A, 40B, 40C, 40D) und über einen Entlüftungsanschluss (3),
- Versorgen der Pneumatikanlage (90) mit Druckluft über eine Druckluftversorgungsleitung (20) mit einem Lufttrockner (22) und einem Druckluftanschluss (2), **dadurch gekennzeichnet, dass**
- die Magnetventilanordnung (40.1, 40.2, 40A, 40B, 40C, 40D) ein Primärventil (41) und ein Sekundärventil (42) aufweist, wobei
- das Primärventil (41) und das Sekundärventil (42) mit einem gemeinsamen auf beide wirkenden Steuermittel (49) der Magnetventilanordnung (40.1, 40.2, 40A, 40B, 40C, 40D) aktiviert wird.

15. Verfahren nach Anspruch 14, **dadurch gekennzeichnet, dass** das Primärventil (41) und das Sekundärventil (42) der Magnetventilanordnung (40.1, 40.2, 40A, 40B, 40C, 40D) in einem ersten Betriebsmodus zeitlich sequentiell, mit einem zunächst einen ersten Schwellwert durchschreitenden Steuerstrom und nach einer betriebsabhängigen Zeitdauer mit einem danach einen zweiten Schwellwert durchschreitenden Steuerstrom, aktiviert werden, insbesondere der Steuerstrom als ein Schalt- oder Haltestrom (I_{S}, I_{H}) gebildet ist, der einen Schwellwert (I_{S1}, I_{S2}, I_{H1}, I_{H2}) sequentiell durchschreitet.

16. Verfahren nach Anspruch 14 oder 15, **dadurch gekennzeichnet, dass** das Primärventil (41) und das Sekundärventil (42) der Magnetventilanordnung (40.1, 40.2, 40A, 40B, 40C, 40D) in einem zweiten Betriebsmodus gleichzeitig mit einem sowohl das Primärventil (41) als auch das Sekundärventil (42) aktivierenden Schwellwert durchschreitenden Steuerstrom aktiviert werden, insbesondere der Steuerstrom als ein Schalt- oder Haltestrom (I_{S}, I_{H}) gebildet ist, der einen Schwellwert (I_{S1}, I_{S2}, I_{H1}, I_{H2}) gleichzeitig durchschreitet.

17. Verfahren nach einem der Ansprüche 14 bis 16, **dadurch gekennzeichnet, dass**
mittels dem gemeinsamen auf Primärventil (41) und Sekundärventil (42) wirkenden Steuermittel (49) bei Durchschreiten eines ersten Schwellwertes (I_{S1}, I_{H1}) eine erste Entlüftungsdrossel in Form der zweiten Drossel (32) bzw. dritten Drossel (33) in der Entlüftungsleitung (30) betätigt wird.

18. Verfahren nach einem der Ansprüche 14 bis 17, **dadurch gekennzeichnet, dass** bei Durchschreiten eines zweiten Schwellwertes (I_{S2}, I_{H2}) zusätzlich eine zweite Entlüftungsdrossel in Form der dritten Drossel (33) bzw. zweiten Drossel (32) in der Entlüftungsleitung (30) betätigt wird.

## Claims

1. Compressed air supply system (10, 10A, 10B, 10C, 10D) for operating a pneumatic device (90), especially a pneumatic spring unit of a vehicle, having:
- an air feed (0) and an air compressor (21) for supplying a compressed air feed (1) with compressed air,
- a vent line (30) with a vent valve arrangement in the form of a controllable solenoid valve arrangement (40.1, 40.2, 40A, 40B, 40C, 40D) and a vent port (3) for discharging air, and
- a compressed air supply line (20) with an air drier (22) and a compressed air port (2) for supplying the pneumatic device (90) with compressed air, **characterized in that**
- the solenoid valve arrangement (40.1, 40.2, 40A, 40B, 40C, 40D) has a primary valve (41) and a secondary valve (42), wherein
- the primary valve (41) and the secondary valve (42) can be activated by a common control means (49) of the solenoid valve arrangement (40.1, 40.2, 40A, 40B, 40C, 40D) which acts upon both valves.

2. Compressed air supply system (10, 10A, 10B, 10C, 10D) according to Claim 1,
**characterized in that** a pneumatic vent-side port (46) and a pneumatic compressed air connection-side port (45) of the solenoid valve arrangement (40.1, 40.2, 40A, 40B, 40C, 40D) are arranged in the vent line (30).

3. Compressed air supply system (10, 10A, 10B, 10C, 10D) according to Claim 1 or 2,
**characterized in that** the primary valve (41) and secondary valve (42) are arranged in a parallel connection, wherein the primary valve (41) is arranged in a first branch line (47) of the parallel connection and the secondary valve (42) is arranged in a second branch line (48) of the parallel connection, wherein the first branch line (47) and second branch line (48) are connected to common ports (45, 46) of a single line, especially of the vent line (30).

4. Compressed air supply system (10A, 10C) according to Claim 1 or 2,
**characterized in that** the primary valve (41) and secondary valve (42) are arranged in a series connection, wherein the primary valve (41) and the secondary valve (42) are arranged in a common single line section between a vent-side port (45) and compressed air connection-side port (46), especially of the vent line (30).

5. Compressed air supply system (10, 10A, 10B, 10C, 10D) according to one of Claims 1 to 4,
**characterized in that** the primary valve (41) and/or the secondary valve (42) have, or has, a pressure limiter (66).

6. Compressed air supply system (10, 10A, 10B, 10C, 10D) according to one of Claims 1 to 5,
**characterized in that** the vent line (30) has a residual pressure maintaining valve (67).

7. Compressed air supply system (10, 10A, 10B, 10C, 10D) according to one of Claims 1 to 6,
**characterized in that** the solenoid valve arrangement (40.1, 40.2, 40A, 40B, 40C, 40D) has only the primary valve (41) and secondary valve (42) as single valves for the direct connecting of a compressed air volume.

8. Compressed air supply system (10, 10A, 10B, 10C, 10D) according to one of Claims 1 to 7,
**characterized in that** a first restrictor (31) is arranged between the compressed air port (2) and the air drier (22) and in the vent line (30) a second restrictor (32) is located upstream of the primary valve (41) and/or a third restrictor (33) is located upstream of the secondary valve (42).

9. Compressed air supply system (10, 10A, 10B, 10C, 10D) according to one of Claims 1 to 8,
**characterized in that** the sum of the nominal diameters of the second restrictor (32) and third restrictor (33) is larger than, especially more than twice the size of, a nominal diameter of a first restrictor (31).

10. Compressed air supply system (10, 10A, 10B, 10C, 10D) according to one of Claims 1 to 9,
**characterized in that** the common control means (49) which act upon the primary valve (41) and the secondary valve (42) comprises a magnetic section (43) of the solenoid valve arrangement, especially a common coil former (63) and/or a common control line (65) or a common control unit which act, or acts, upon both valves.

11. Compressed air supply system (10, 10A, 10B, 10C, 10D) according to Claim 10,
**characterized in that** the solenoid valve arrangement (40.1, 40.2, 40A, 40B, 40C, 40D) is formed as a double-armature solenoid valve which has a primary armature (61B) carrying a first sealing element (61A) of the primary valve (41) and a secondary armature (62B) carrying a second sealing element (62A) of the secondary valve (42), which are arranged in a common coil former (63), especially enclosed by a common coil former (63).

12. Compressed air supply system (10, 10A, 10B, 10C, 10D) according to one of Claims 1 to 11,
**characterized in that** a desiccant container (58) of the air drier (22) has a wall (W) which forms a desiccant-free recess (G), wherein the solenoid valve arrangement (40.1, 40.2, 40A, 40B, 40C, 40D) is arranged at least partially in the recess (G).

13. Pneumatic system (100, 100A, 100B, 100C, 100D) having the compressed air supply system (10, 10A, 10B, 10C, 10D) according to one of Claims 1 to 12 and having a pneumatic device (90) in the form of a pneumatic spring unit.

14. Method for operating a pneumatic device (90), especially a pneumatic spring unit of a vehicle, by means of a compressed air supply system (10, 10A, 10B, 10C, 10D) according to one of Claims 1 to 12, featuring the steps:
- supplying a compressed air feed (1) with compressed air by means of an air feed (0) and an air compressor (21),
- discharging air via a vent line (30) by means of a vent valve arrangement in the form of a controllable solenoid valve arrangement (40.1, 40.2, 40A, 40B, 40C, 40D) and via a vent port (3),
- supplying the pneumatic device (90) with compressed air via a compressed air supply line (20) with an air drier (22) and a compressed air port (2),
**characterized in that**
- the solenoid valve arrangement (40.1, 40.2, 40A, 40B, 40C, 40D) has a primary valve (41) and a secondary valve (42), wherein
- the primary valve (41) and the secondary valve (42) are activated by a common control means (49) of the solenoid valve arrangement (40.1, 40.2, 40A, 40B, 40C, 40D) which acts upon both valves.

15. Method according to Claim 14, **characterized in that** the primary valve (41) and the secondary valve (42) of the solenoid valve arrangement (40.1, 40.2, 40A, 40B, 40C, 40D) in a first operating mode are activated in a time-based sequential manner by a control current which initially crosses a first threshold value and, after an operation-dependent period of time, by a control current which then crosses a second threshold value, the control current particularly being formed as a switching current (I_{S}) or holding current (I_{H}) which crosses a threshold value (I_{S1}, I_{S2}, I_{H1}, I_{H2}) in a sequential manner.

16. Method according to Claim 14 or 15, **characterized in that** the primary valve (41) and the secondary valve (42) of the solenoid valve arrangement (40.1, 40.2, 40A, 40B, 40C, 40D) in a second operating mode are activated at the same time by a control current which crosses a threshold value which activates both the primary valve (41) and the secondary valve (42), the control current particularly being formed as a switching current (I_{S}) or holding current (I_{H}) which crosses a threshold value (I_{S1}, I_{S2}, I_{H1}, I_{H2}) at the same time.

17. Method according to one of Claims 14 to 16, **characterized in that** by means of the common control means (49) which acts upon primary valve (41) and secondary valve (42), a first vent restrictor in the form of the second restrictor (32) or third restrictor (33) in the vent line (30) is operated when a first threshold value (I_{S1}, I_{H1}) is crossed.

18. Method according to one of Claims 14 to 17, **characterized in that** when a second threshold value (I_{S2}, I_{H2}) is crossed, a second vent restrictor in the form of the third restrictor (33) or second restrictor (32) in the vent line (30) is additionally operated.

## Revendications

1. Installation (10, 10A, 10B, 10C, 10D) d'alimentation en air comprimé destinée à alimenter une installation pneumatique (90) et en particulier une installation d'amortissement pneumatique d'un véhicule, et présentant :
une amenée d'air (0) et un compresseur d'air (21) qui alimente en air comprimé une amenée (1) d'air comprimé,
un conduit d'évent (30) présentant un ensemble de soupape d'évent qui prend la forme d'un ensemble asservi (40.1, 40.2, 40A, 40B, 40C, 40D) de soupape magnétique et d'un raccord d'évent (3) permettant l'évacuation d'air et
un conduit (20) d'alimentation en air comprimé doté d'un séchoir d'air (22) et d'un raccordement (2) à l'air comprimé qui alimente en air l'installation pneumatique (20),
**caractérisée en ce que**
l'ensemble (40.1, 40.2, 40A, 40B, 40C, 40D) de soupape magnétique présente une soupape primaire (41) et une soupape secondaire (42),
**en ce que** la soupape primaire (41) et la soupape secondaire (42) peuvent être activées par un moyen de commande (49) de l'ensemble (40.1, 40.2, 40A, 40B, 40C, 40D) de soupape magnétique qui agit sur les deux.

2. Installation (10, 10A, 10B, 10C, 10D) d'alimentation en air comprimé selon la revendication 1, **caractérisée en ce qu'**un raccordement pneumatique (46) à l'évacuation d'air et un raccordement pneumatique (45) à l'air comprimé de l'ensemble (40.1, 40.2, 40A, 40B, 40C, 40D) de soupape magnétique sont disposés dans le conduit d'évent (30).

3. Installation (10, 10A, 10B, 10C, 10D) d'alimentation en air comprimé selon les revendications 1 ou 2, **caractérisée en ce que** la soupape primaire (41) et la soupape secondaire (42) sont raccordées en parallèle, la soupape primaire (41) étant disposée dans un première branche (47) et la soupape secondaire (42) dans une deuxième branche (48) du raccordement en parallèle, la première et la deuxième branche (47, 48) étant raccordées à des raccordements communs (45, 46) d'un unique conduit, en particulier du conduit d'évent (30).

4. Installation (10A, 10C) d'alimentation en air comprimé selon les revendications 1 ou 2, **caractérisée en ce que** la soupape primaire (41) et la soupape secondaire (42) sont raccordées en série, la soupape primaire (41) et la soupape secondaire (42) étant disposées dans une unique section commune de conduit située entre un raccordement côté évent et un raccordement côté air comprimé (45, 46), en particulier du conduit d'évent (30).

5. Installation (10, 10A, 10B, 10C, 10D) d'alimentation en air comprimé selon l'une des revendications 1 à 4, **caractérisée en ce que** la soupape primaire (41) et/ou la soupape secondaire (42) présentent un limiteur de pression (66).

6. Installation (10, 10A, 10B, 10C, 10D) d'alimentation en air comprimé selon l'une des revendications 1 à 5, **caractérisée en ce que** le conduit d'évent (30) présente une soupape (67) de retenue d'une pression résiduelle.

7. Installation (10, 10A, 10B, 10C, 10D) d'alimentation en air comprimé selon l'une des revendications 1 à 6, **caractérisée en ce que** l'ensemble (40.1, 40.2, 40A, 40B, 40C, 40D) de soupape magnétique présente uniquement la soupape primaire et la soupape secondaire (41, 42) comme simples soupapes en vue du raccordement direct d'un volume d'air comprimé.

8. Installation (10, 10A, 10B, 10C, 10D) d'alimentation en air comprimé selon l'une des revendications 1 à 7, **caractérisée en ce qu'**un premier étranglement (31) est disposé entre le raccordement (2) à l'air comprimé et le séchoir d'air (22) et **en ce que** dans le conduit d'évent (30), un deuxième étranglement (32) disposé en amont de la soupape primaire (41) et/ou un troisième étranglement (33) est disposé en amont de la soupape secondaire (42).

9. Installation (10, 10A, 10B, 10C, 10D) d'alimentation en air comprimé selon l'une des revendications 1 à 8, **caractérisée en ce que** la somme des diamètres nominaux du deuxième et du troisième étranglement (32, 33) est supérieure au diamètre nominal et en particulier au double du diamètre nominal du premier étranglement (31).

10. Installation (10, 10A, 10B, 10C, 10D) d'alimentation en air comprimé selon l'une des revendications 1 à 9, **caractérisée en ce que** le moyen de commande (49) qui agit conjointement sur la soupape primaire (41) et sur la soupape secondaire (42) comporte une partie magnétique (43) de l'ensemble de soupape magnétique, en particulier un corps de bobine commun (63) qui agit sur les deux et/ou un conduit pilote commun (65) ou une commande commune.

11. Installation (10, 10A, 10B, 10C, 10D) d'alimentation en air comprimé selon la revendication 10, **caractérisée en ce que** l'ensemble (40.1, 40.2, 40A, 40B, 40C, 40D) de soupape magnétique est configuré comme soupape magnétique à double induit qui présente un induit primaire (61B) portant un premier élément d'étanchéité (61A) de la soupape primaire (41) et un induit secondaire (62B) portant un deuxième élément d'étanchéité (62A) de la soupape secondaire (42), les induits étant disposés dans un corps commun de bobine (63) et étant en particulier entourés par un corps commun de bobine (63).

12. Installation (10, 10A, 10B, 10C, 10D) d'alimentation en air comprimé selon l'une des revendications 1 à 11, **caractérisée en ce qu'**un réservoir sec (58) du séchoir d'air (22) présente une paroi (W) qui forme un creux (G) exempt d'agent de séchage, l'ensemble (40.1, 40.2, 40A, 40B, 40C, 40D) de soupape magnétique étant disposé au moins en partie dans le creux (G).

13. Système pneumatique (100, 100A, 100B, 100C, 100D) présentant l'installation (10, 10A, 10B, 10C, 10D) d'alimentation en air comprimé selon l'une des revendications 1 à 12 et une installation pneumatique (90) qui présente la forme d'une installation d'amortissement pneumatique.

14. Procédé d'utilisation d'une installation pneumatique (90), en particulier d'une installation d'amortissement pneumatique d'un véhicule, au moyen d'une installation (10, 10A, 10B, 10C, 10D) d'alimentation en air comprimé selon l'une des revendications 1 à 12, le procédé présentant les étapes suivantes :
alimenter en air comprimé un conduit (1) d'amenée d'air comprimé, au moyen d'une amenée (0) d'air comprimé et d'un compresseur d'air (21),
évacuer de l'air par un conduit d'évent (30) au moyen d'un ensemble de soupape d'évent qui présente la forme d'un ensemble (40.1, 40.2, 40A, 40B, 40C, 40D) de soupape magnétique et par l'intermédiaire d'un raccordement d'évent (3),
alimenter l'installation pneumatique (90) en air comprimé par un conduit (20) d'alimentation en air comprimé présentant un séchoir d'air (22) et un raccordement (2) à l'air comprimé,
**caractérisé en ce que**
l'ensemble (40.1, 40.2, 40A, 40B, 40C, 40D) de soupape magnétique présente une soupape primaire (41) et une soupape secondaire (42) et **en ce que**
la soupape primaire (41) et la soupape secondaire (42) peuvent être activées par un moyen de commande (49) de l'ensemble (40.1, 40.2, 40A, 40B, 40C, 40D) de soupape magnétique qui agit sur les deux.

15. Procédé selon la revendication 14, **caractérisé en ce que** dans un premier mode de fonctionnement, la soupape primaire (41) et la soupape secondaire (42) de l'ensemble (40.1, 40.2, 40A, 40B, 40C, 40D) de soupape magnétique sont activées successivement, avec un courant de commande qui dépasse d'abord une première valeur de seuil et ensuite, après une durée qui dépend du fonctionnement, un courant de commande qui dépasse une deuxième valeur de seuil, le courant de commande étant en particulier configuré comme courants de commutation ou de maintien (I_{S}, I_{H}) qui traversent successivement une valeur de seuil (I_{S1}, I_{S2}, I_{H1}, I_{H2}) .

16. Procédé selon les revendications 14 ou 15, **caractérisé en ce que** dans un deuxième mode de fonctionnement, la soupape primaire (41) et la soupape secondaire (42) de l'ensemble (40.1, 40.2, 40A, 40B, 40C, 40D) de soupape magnétique sont activées simultanément avec un courant de commande qui traverse une valeur de seuil activant à la fois la soupape primaire (41) et la soupape secondaire (42), le courant de commande étant en particulier configuré comme courants de commutation ou de maintien (I_{S}, I_{H}) qui traversent simultanément une valeur de seuil (I_{S1}, I_{S2}, I_{H1}, I_{H2}) .

17. Procédé selon l'une des revendications 14 à 16, **caractérisé en ce qu'**au moyen du moyen de commande (49) qui agit conjointement sur la soupape primaire (41) et la soupape secondaire (42), lors de la traversée d'une première valeur de seuil (I_{S1}, I_{H1}), un premier étranglement d'évent qui présente la forme du deuxième étranglement (32) ou du troisième étranglement (33) est actionné dans le conduit d'évent (30).

18. Procédé selon l'une des revendications 14 à 17, **caractérisé en ce que** lorsqu'une deuxième valeur de seuil (I_{S2}, I_{H2}) est dépassée, un deuxième étranglement d'évent qui présente la forme du troisième étranglement (33) ou du deuxième étranglement (32) est de plus actionné dans le conduit d'évent (30).
